# EUROPEAN PATENT APPLICATION

(11) **EP 4 793 802 A1**
(43) Date of publication of application: **19.08.2026**
(21) Application number: 26159171.3
(22) Date of filing: 17.02.2026
(51) Int. Cl.: G06F 21/31, G06F 21/32, G06F 21/44, G06F 21/62, H04L 9/40, H04W 12/06, H04W 12/069, H04W 12/33

(54) **SYSTEMS, METHODS, AND DEVICES FOR AUTHENTICATION MANAGEMENT ACROSS DEVICE CONSTELLATIONS**

(30) Priority: 18.02.2025 US 202563760103 P; 13.02.2026 US 202619540343
(71) Applicant: Meta Platforms Technologies, LLC, Menlo Park, CA 94025 (US)
(72) Inventor: MARTINY, Theodore Ian, Menlo Park, 94025 (US); YU, Hsuhua, Menlo Park, 94025 (US); MODADUGU, Nagendra Gupta, Menlo Park, 94025 (US); GOYAL, Anish Kumar, Menlo Park, 94025 (US); LIN, Bo-Huei, Menlo Park, 94025 (US); CHHODAVDIA, Avdhesh, Menlo Park, 94025 (US)
(74) Representative: Murgitroyd & Company

(57) **Abstract**

An example method for managing authentication across multiple devices is described. A first device, having a first privilege level, receives a first authentication input, and in response unlocks. The first device further generates a secondary authentication credential based on the authentication input and transmits this credential to one or more secondary devices, where the one or more secondary devices each have a respective privilege level that is lower than the first privilege level, and the secondary authentication credential causes the one or more secondary devices to unlock. In some embodiments, hierarchical privileges are maintained where the first device has higher authentication privileges than the secondary devices. In some embodiments, secure authentication is implemented through cryptographic device identification, secure channels, and privilege-based access control, while enabling features like device replacement, synchronized state management, and enterprise security controls. Systems and devices configured to perform such methods are also described.

## Description

### PRIORITY AND RELATED APPLICATIONS

This application claims the benefit of U.S. Provisional Application 63/760,103 filed February 18, 2025.

### TECHNICAL FIELD

The disclosed implementations relate to authentication systems in distributed computing environments, including but not limited to systems and methods for managing synchronized authentication states across device constellations.

### BACKGROUND

Modern computing increasingly relies on distributed device ecosystems where multiple devices work together to provide seamless experiences. A particular challenge arises in device constellations that combine devices with different authentication capabilities and privilege levels, as exemplified in extended-reality systems where a headset communicates with a separate storage unit that may lack direct authentication mechanisms but contains sensitive user data. Conventional authentication systems primarily address scenarios where all devices have equivalent authentication capabilities, such as smartphone-smartwatch pairs. However, these systems fail to address the unique challenges of mixed-capability device constellations, particularly regarding state synchronization, secure credential transmission, and/or authentication delegation from higher-privilege devices to lower-privilege companions. This limitation becomes especially apparent in AR systems where a user donning a headset needs to unlock both the headset and its associated storage unit simultaneously and securely without direct interaction with the latter device.

### SUMMARY

Accordingly, there is a need for systems and methods that provide secure authentication management across device constellations with mixed user interface capabilities. The techniques described herein enable secure authentication state synchronization between devices (e.g., Ul-capable primary devices and Ul-less secondary devices) while maintaining strict privilege hierarchies. Technology improvements include, for example, unified authentication flows across devices, secure credential transmission, and/or robust protection against common attack vectors including replay and man-in-the-middle attacks.

The present invention provides a method managing synchronized authentication states, a non-transitory, computer-readable storage medium and a wearable device as defined in the appended claims.

In accordance with a first aspect, there is provided a method comprising:
receiving a first authentication input at a first device having a first privilege level; and
in response to receiving the first authentication input at the first device:
   unlocking the first device;
   generating a secondary authentication credential based on the first authentication input; and
   transmitting the secondary authentication credential to one or more secondary devices, wherein:
      the one or more secondary devices each have a respective privilege level that is lower than the first privilege level, and
      the secondary authentication credential causes the one or more secondary devices to unlock.

The method may further comprise:
based on a determination that another one or more devices have a respective privilege level that is higher than the first privilege level:
not transmitting the secondary authentication credential to the other one or more devices.

The method may further comprise:
in response to receiving a locking input at the first device:
locking the first device;
generating a secondary locking output based on the locking input; and
transmitting the secondary locking output to the one or more secondary devices, wherein the secondary locking output causes the one or more secondary devices to lock.

The method may further comprise:
receiving a secondary locking output transmitted from a secondary device of the one or more secondary devices, wherein the secondary locking output is generated based on a locking input received at the secondary device and transmitted to the first device and the other one or more secondary devices; and
in response to receiving the secondary locking output from the secondary device, locking the first device.

The one or more secondary devices may comprise a plurality of devices.

At least one of the secondary devices may comprise a user interface.

A device type of at least one of the one or more secondary devices may be the same as a device type of the first device.

The method may further comprise: before transmitting the secondary authentication credential, verifying, by the first device, a device identity of the one or more secondary devices.

The method may further comprise:
provisioning the first device and the one or more secondary devices with unique cryptographic identifiers; and
wherein verifying the device identify of the one or more secondary devices comprises:
   establishing, using a first device cryptographic identifier, an identity of the first device to the one or more secondary devices; and
   verifying, using respective cryptographic identifiers for the one or more secondary devices, identities of the one or more secondary devices.

The method may further comprise:
determining a respective privilege level for each of the one or more secondary devices.

The method may further comprise:
establishing a private communication channel with the one or more secondary devices for transmitting the secondary authentication credential.

The first device may be configured to support a plurality of authentication methods for receiving a first authentication input, the plurality of authentication methods comprising at least one biometric authentication method and at least one knowledge-based authentication method.

In accordance with a second aspect, there is provided a non-transitory, computer-readable storage medium storing instructions that, when executed by a computing system, cause the computing system to perform a process, the process comprising:
receiving a first authentication input at a first device having a first privilege level; and
in response to receiving the first authentication input at the first device:
   unlocking the first device;
   generating a secondary authentication credential based on the first authentication input; and
   transmitting the secondary authentication credential to one or more secondary devices, wherein:
      the one or more secondary devices each have a respective privilege level that is lower than the first privilege level, and
      the secondary authentication credential causes the one or more secondary devices to unlock.

The instructions may further comprise instructions for:
based on a determination that another one or more devices have a respective privilege level that is higher than the first privilege level:
not transmitting the secondary authentication credential to the other one or more devices.

The instructions may further comprise instructions for:
in response to receiving a locking input at the first device:
locking the first device;
generating a secondary locking output based on the locking input; and
transmitting the secondary locking output to the one or more secondary devices, wherein the secondary locking output causes the one or more secondary devices to lock.

The instructions may further comprise instructions for:
receiving a secondary locking output transmitted from a secondary device of the one or more secondary devices, wherein the secondary locking output is generated based on a locking input received at the secondary device and transmitted to the first device and the other one or more secondary devices; and
in response to receiving the secondary locking output from the secondary device, locking the first device.

In accordance with a third aspect, there is provided a wearable device, the wearable device comprising:
a processor; and
a memory on which is stored machine-readable instructions, which when executed, cause the processor to:
   receive a first authentication input at the wearable device, the wearable device having a first privilege level; and
in response to receiving the first authentication input at the first device:
   unlock the first device;
   generate a secondary authentication credential based on the first authentication input; and
   transmit the secondary authentication credential to one or more secondary devices, wherein:
      the one or more secondary devices each have a respective privilege level that is lower than the first privilege level, and
      the secondary authentication credential causes the one or more secondary devices to unlock.

The instructions may further cause the processor to:
based on a determination that another one or more devices have a respective privilege level that is higher than the first privilege level:
not transmit the secondary authentication credential to the other one or more devices.

The instructions may further cause the processor to:
in response to receiving a locking input at the first device:
lock the first device;
generate a secondary locking output based on the locking input; and
transmit the secondary locking output to the one or more secondary devices, wherein the secondary locking output causes the one or more secondary devices to lock.

The instructions may further cause the processor to:
receive a secondary locking output transmitted from a secondary device of the one or more secondary devices, wherein the secondary locking output is generated based on a locking input received at the secondary device and transmitted to the first device and the other one or more secondary devices; and
in response to receiving the secondary locking output from the secondary device, lock the first device.

According to some embodiments, an authentication management system for device constellations includes one or more primary devices with user interfaces and one or more secondary devices without authentication and/or UI capabilities. The system may implement privilege-based authentication flows where primary devices can initiate unlock operations and transmit derived authentication credentials to secondary devices, while all devices maintain the ability to trigger system-wide lock states. The architecture can be used to ensure security through cryptographically-verified device identities provisioned during manufacture, secure communication channels between devices, and strict enforcement of privilege levels during authentication operations. This enables seamless user experiences in scenarios like AR systems where headsets must securely unlock associated storage units, while maintaining strong security guarantees through features like rate limiting, state synchronization, and/or enterprise policy controls.

Some embodiments include a system for managing authentication across multiple devices comprises a primary device having a user interface configured to receive user authentication input and a secondary device (e.g., without a user interface for authentication). The primary device is configured to receive authentication input through the user interface, derive a secondary authentication credential based on the received authentication input, and transmit the secondary authentication credential to the secondary device. The secondary device is configured to receive the secondary authentication credential from the primary device and unlock based on the received secondary authentication credential. The primary device is configured to have a higher privilege level than the secondary device for authentication operations.

Some embodiments include a method for managing authentication across multiple devices. The method includes receiving authentication input at a primary device having a user interface, deriving a secondary authentication credential based on the received authentication input, transmitting the secondary authentication credential to a secondary device (e.g., without a user interface), unlocking the secondary device based on the received secondary authentication credential, and maintaining different privilege levels between the primary and secondary devices for authentication operations.

Instructions that cause performance of the methods and operations described herein can be stored on a non-transitory computer readable storage medium. The non-transitory computer-readable storage medium can be included on a single electronic device or spread across multiple electronic devices of a system (computing system). A non-exhaustive of list of electronic devices that can either alone or in combination (e.g., a system) perform the method and operations described herein include an extended-reality (XR) headset/glasses (e.g., a mixed-reality (MR) headset or a pair of augmented-reality (AR) glasses as two examples), a wrist-wearable device, an intermediary processing device, a smart textile-based garment, etc. For instance, the instructions can be stored on a pair of AR glasses or can be stored on a combination of a pair of AR glasses and an associated input device (e.g., a wrist-wearable device) such that instructions for causing detection of input operations can be performed at the input device and instructions for causing changes to a displayed user interface in response to those input operations can be performed at the pair of AR glasses. The devices and systems described herein can be configured to be used in conjunction with methods and operations for providing an XR experience. The methods and operations for providing an XR experience can be stored on a non-transitory computer-readable storage medium.

The devices and/or systems described herein can be configured to include instructions that cause the performance of methods and operations associated with the presentation and/or interaction with an extended-reality (XR) headset. These methods and operations can be stored on a non-transitory computer-readable storage medium of a device or a system. It is also noted that the devices and systems described herein can be part of a larger, overarching system that includes multiple devices. A non-exhaustive of list of electronic devices that can, either alone or in combination (e.g., a system), include instructions that cause the performance of methods and operations associated with the presentation and/or interaction with an XR experience include an extended-reality headset (e.g., a mixed-reality (MR) headset or a pair of augmented-reality (AR) glasses as two examples), a wrist-wearable device, an intermediary processing device, a smart textile-based garment, etc. For example, when an XR headset is described, it is understood that the XR headset can be in communication with one or more other devices (e.g., a wrist-wearable device, a server, intermediary processing device) which together can include instructions for performing methods and operations associated with the presentation and/or interaction with an extended-reality system (i.e., the XR headset would be part of a system that includes one or more additional devices). Multiple combinations with different related devices are envisioned, but not recited for brevity.

The features and advantages described in the specification are not necessarily all inclusive and, in particular, certain additional features and advantages will be apparent to one of ordinary skill in the art in view of the drawings, specification, and claims, the invention being defined in the appended claims. Moreover, it should be noted that the language used in the specification has been principally selected for readability and instructional purposes.

It will be appreciated that any features described herein as being suitable for incorporation into one or more aspects are intended to be generalizable across any and all aspects described herein. Other aspects can be understood by those skilled in the art in light of the description, the claims and the drawings. The foregoing general description and the following detailed description are exemplary and explanatory only and are not restrictive of the claims.

Having summarized the above example aspects, a brief description of the drawings will now be presented.

### BRIEF DESCRIPTION OF THE DRAWINGS

For a better understanding of the various described implementations, reference should be made to the Description of Implementations below, in conjunction with the following drawings in which like reference numerals refer to corresponding parts throughout the figures.
Figure 1 is a schematic diagram of an example system for managing authentication across multiple devices in accordance with some embodiments.
Figure 2 is a diagram of an example state machine for device authentication in accordance with some embodiments.
Figure 3 shows a schematic diagram for example user actions for device authentication in accordance with some embodiments.
Figure 4 shows a block diagram of an example system for device authentication in accordance with some embodiments.
Figure 5A is a flowchart of an example method for managing authentication across multiple devices in accordance with some embodiments.
Figure 5B is a flowchart of another example method for managing authentication across multiple devices in accordance with some embodiments.
Figures 6A-6E illustrate an example method for managing authentication across multiple devices in accordance with some embodiments.
Figures 7A-7F illustrate an example method for managing authentication across multiple devices via rate-limiting mechanisms in accordance with some embodiments.
Figures 8A, 8B, 8C-1, and 8C-2 illustrate example MR and AR systems in accordance with some embodiments.

In accordance with common practice, the various features illustrated in the drawings may not be drawn to scale. Accordingly, the dimensions of the various features may be arbitrarily expanded or reduced for clarity. In addition, some of the drawings may not depict all of the components of a given system, method, or device. Finally, like reference numerals may be used to denote like features throughout the specification and figures.

### DETAILED DESCRIPTION

The following description relates to authentication management techniques for device constellations where devices possess varying levels of authentication capabilities and privileges. Consider a wearable ecosystem where a smartwatch coordinates with fitness sensors and a health monitoring patch. The watch may serve as a high-privilege device capable of receiving user authentication input, while the fitness sensors and health monitoring patch may be lower-privilege devices that lack direct authentication mechanisms but store sensitive health data. In some embodiments, when a user authenticates at the smartwatch, e.g., using a PIN or biometric input, the smartwatch derives a secondary authentication credential and securely transmits it to the lower-privilege devices, causing them to unlock without requiring the user to interact with each device separately. In some embodiments, while only higher-privilege devices can initiate unlock operations for the constellation, any device in the constellation, regardless of privilege level, can initiate a lock state that propagates to all other devices. For example, pressing a lock button on the health monitoring patch may cause the entire constellation, including the smartwatch, to enter a locked state. In some embodiments, the constellation implements a shared rate-limiting mechanism that tracks failed authentication attempts across all devices, enforces progressive delays between attempts, and can trigger a permanent lock state requiring factory reset after exceeding a threshold of failed attempts, thereby protecting against brute force attacks.

As another example, consider a home automation ecosystem where a central hub device with a touchscreen coordinates with multiple smart sensors, door locks, and/or appliances distributed throughout a residence. The hub may serve as a high-privilege device capable of receiving user authentication input, while the distributed devices may be lower-privilege devices that lack direct authentication mechanisms but control access to the home and sensitive user data. In some embodiments, when a user authenticates at the hub, the hub derives secondary authentication credentials and securely transmits them to the lower-privilege devices, causing them to unlock and become operational. In some embodiments, the privilege hierarchy ensures that only higher-privilege devices can initiate unlock operations and transmit authentication credentials, while lower-privilege devices cannot independently unlock or unlock other devices. However, any device in the constellation may initiate a system-wide lock state. For example, activating a lock function on any smart sensor may cause the entire constellation to enter a locked state. In some embodiments, the constellation implements an adaptive security mechanism with a shared counter of failed authentication attempts that synchronizes across all devices, calculates progressive delay periods between allowed attempts, and broadcasts security state updates throughout the constellation. When the shared counter exceeds a predetermined threshold, a permanent lock state may propagate across all devices, preventing further authentication attempts until a factory-authorized reset is performed.

These techniques address the practical challenge of maintaining security across heterogeneous device groupings while preserving usability. By establishing clear privilege hierarchies, the system ensures that only designated devices can initiate unlock operations, e.g., while any device retains the ability to trigger a protective lock state. This asymmetric approach prevents unauthorized access through lower-capability devices while enabling rapid security responses from any point in the constellation. The architecture also accommodates device replacement scenarios, connection interruptions, and enterprise policy requirements, providing a flexible foundation for multi-device authentication that scales with evolving product configurations.

The following sections describe the disclosed embodiments in greater detail. The Overview section provides context regarding extended-reality systems and the various input modalities and device types that may incorporate the disclosed authentication management architectures. The Authentication Management section describes the architecture for managing authentication across device constellations, including the relationship between primary devices with user interfaces and secondary devices without authentication capabilities, along with the various components that enable secure credential transmission, such as cryptographic identifiers, privilege-based communication architectures, and state synchronization mechanisms. This section also presents the state machine for device authentication, example user actions for device authentication, and a block diagram of the system architecture including core services, authentication layers, and data management components. The Example Methods section details methods of managing authentication across multiple devices including receiving authentication input at a primary device, deriving secondary authentication credentials, transmitting credentials to secondary devices, and maintaining privilege hierarchies. The section also describes rate-limiting mechanisms, progressive delays, permanent lock states, and device replacement procedures. The Example Extended-Reality Systems section describes augmented-reality and mixed-reality systems in which the disclosed authentication management architectures may be implemented, including associated wearable devices and intermediary processing devices.

The above summary provides a brief introduction to the disclosed concepts and is not intended as a limitation on the scope of the present disclosure, the invention being defined in the appended claims. The following description sets forth example methods, architectures, parameters, and the like, which should be recognized as descriptions of example embodiments rather than limitations on the scope of the present disclosure, the invention being defined in the appended claims.

Numerous details are described herein to provide a thorough understanding of the example embodiments illustrated in the accompanying drawings. However, some embodiments may be practiced without many of the specific details, and the scope of the claims is only limited by those features and aspects specifically recited in the claims. Furthermore, well-known processes, components, and materials have not necessarily been described in exhaustive detail so as to avoid obscuring pertinent aspects of the embodiments described herein.

### Overview

Embodiments of this disclosure can include or be implemented in conjunction with various types of extended-realities (XRs) such as mixed-reality (MR) and augmented-reality (AR) systems. MRs and ARs, as described herein, are any superimposed functionality and/or sensory-detectable presentation provided by MR and AR systems within a user's physical surroundings. Such MRs can include and/or represent virtual realities (VRs) and VRs in which at least some aspects of the surrounding environment are reconstructed within the virtual environment (e.g., displaying virtual reconstructions of physical objects in a physical environment to avoid the user colliding with the physical objects in a surrounding physical environment). In the case of MRs, the surrounding environment that is presented through a display is captured via one or more sensors configured to capture the surrounding environment (e.g., a camera sensor, time-of-flight (ToF) sensor). While a wearer of an MR headset can see the surrounding environment in full detail, they are seeing a reconstruction of the environment reproduced using data from the one or more sensors (i.e., the physical objects are not directly viewed by the user). An MR headset can also forgo displaying reconstructions of objects in the physical environment, thereby providing a user with an entirely VR experience. An AR system, on the other hand, provides an experience in which information is provided, e.g., through the use of a waveguide, in conjunction with the direct viewing of at least some of the surrounding environment through a transparent or semi-transparent waveguide(s) and/or lens(es) of the AR glasses. Throughout this application, the term "extended reality (XR)" is used as a catchall term to cover both ARs and MRs. In addition, this application also uses, at times, a head-wearable device or headset device as a catchall term that covers XR headsets such as AR glasses and MR headsets.

As alluded to above, an MR environment, as described herein, can include, but is not limited to, non-immersive, semi-immersive, and fully immersive VR environments. As also alluded to above, AR environments can include marker-based AR environments, markerless AR environments, location-based AR environments, and projection-based AR environments. The above descriptions are not exhaustive and any other environment that allows for intentional environmental lighting to pass through to the user would fall within the scope of an AR, and any other environment that does not allow for intentional environmental lighting to pass through to the user would fall within the scope of an MR.

The AR and MR content can include video, audio, haptic events, sensory events, or some combination thereof, any of which can be presented in a single channel or in multiple channels (such as stereo video that produces a three-dimensional effect to a viewer). Additionally, AR and MR can also be associated with applications, products, accessories, services, or some combination thereof, which are used, for example, to create content in an AR or MR environment and/or are otherwise used in (e.g., to perform activities in) AR and MR environments.

Interacting with these AR and MR environments described herein can occur using multiple different modalities and the resulting outputs can also occur across multiple different modalities. In one example AR or MR system, a user can perform a swiping in-air hand gesture to cause a song to be skipped by a song-providing application programming interface (API) providing playback at, for example, a home speaker.

A hand gesture, as described herein, can include an in-air gesture, a surface-contact gesture, and or other gestures that can be detected and determined based on movements of a single hand (e.g., a one-handed gesture performed with a user's hand that is detected by one or more sensors of a wearable device (e.g., electromyography (EMG) and/or inertial measurement units (IMUs) of a wrist-wearable device, and/or one or more sensors included in a smart textile wearable device) and/or detected via image data captured by an imaging device of a wearable device (e.g., a camera of a head-wearable device, an external tracking camera setup in the surrounding environment)). "In-air" generally includes gestures in which the user's hand does not contact a surface, object, or portion of an electronic device (e.g., a head-wearable device or other communicatively coupled device, such as the wrist-wearable device), in other words the gesture is performed in open air in 3D space and without contacting a surface, an object, or an electronic device. Surface-contact gestures (contacts at a surface, object, body part of the user, or electronic device) more generally are also contemplated in which a contact (or an intention to contact) is detected at a surface (e.g., a single- or double-finger tap on a table, on a user's hand or another finger, on the user's leg, a couch, a steering wheel). The different hand gestures disclosed herein can be detected using image data and/or sensor data (e.g., neuromuscular signals sensed by one or more biopotential sensors (e.g., EMG sensors) or other types of data from other sensors, such as proximity sensors, ToF sensors, sensors of an IMU, capacitive sensors, strain sensors) detected by a wearable device worn by the user and/or other electronic devices in the user's possession (e.g., smartphones, laptops, imaging devices, intermediary devices, and/or other devices described herein).

The input modalities as alluded to above can be varied and are dependent on a user's experience. For example, in an interaction in which a wrist-wearable device is used, a user can provide inputs using in-air or surface-contact gestures that are detected using neuromuscular signal sensors of the wrist-wearable device. In the event that a wrist-wearable device is not used, alternative and entirely interchangeable input modalities can be used instead, such as camera(s) located on the headset/glasses or elsewhere to detect in-air or surface-contact gestures or inputs at an intermediary processing device (e.g., through physical input components (e.g., buttons and trackpads)). These different input modalities can be interchanged based on both desired user experiences, portability, and/or a feature set of the product (e.g., a low-cost product may not include hand-tracking cameras).

While the inputs are varied, the resulting outputs stemming from the inputs are also varied. For example, an in-air gesture input detected by a camera of a head-wearable device can cause an output to occur at a head-wearable device or control another electronic device different from the head-wearable device. In another example, an input detected using data from a neuromuscular signal sensor can also cause an output to occur at a head-wearable device or control another electronic device different from the head-wearable device. While only a couple examples are described above, one skilled in the art would understand that different input modalities are interchangeable along with different output modalities in response to the inputs.

Specific operations described above may occur as a result of specific hardware. The devices described are not limiting and features on these devices can be removed or additional features can be added to these devices. The different devices can include one or more analogous hardware components. For brevity, analogous devices and components are described herein. Any differences in the devices and components are described below in their respective sections.

As described herein, a processor (e.g., a central processing unit (CPU) or microcontroller unit (MCU)), is an electronic component that is responsible for executing instructions and controlling the operation of an electronic device (e.g., a wrist-wearable device, a head-wearable device, a handheld intermediary processing device (HIPD), a smart textile-based garment, or other computer system). There are various types of processors that may be used interchangeably or specifically required by embodiments described herein. For example, a processor may be (i) a general processor designed to perform a wide range of tasks, such as running software applications, managing operating systems, and performing arithmetic and logical operations; (ii) a microcontroller designed for specific tasks such as controlling electronic devices, sensors, and motors; (iii) a graphics processing unit (GPU) designed to accelerate the creation and rendering of images, videos, and animations (e.g., VR animations, such as three-dimensional modeling); (iv) a field-programmable gate array (FPGA) that can be programmed and reconfigured after manufacturing and/or customized to perform specific tasks, such as signal processing, cryptography, and machine learning; or (v) a digital signal processor (DSP) designed to perform mathematical operations on signals such as audio, video, and radio waves. One of skill in the art will understand that one or more processors of one or more electronic devices may be used in various embodiments described herein.

As described herein, controllers are electronic components that manage and coordinate the operation of other components within an electronic device (e.g., controlling inputs, processing data, and/or generating outputs). Examples of controllers can include (i) microcontrollers, including small, low-power controllers that are commonly used in embedded systems and Internet of Things (IoT) devices; (ii) programmable logic controllers (PLCs) that may be configured to be used in industrial automation systems to control and monitor manufacturing processes; (iii) system-on-a-chip (SoC) controllers that integrate multiple components such as processors, memory, I/O interfaces, and other peripherals into a single chip; and/or (iv) DSPs. As described herein, a graphics module is a component or software module that is designed to handle graphical operations and/or processes and can include a hardware module and/or a software module.

As described herein, memory refers to electronic components in a computer or electronic device that store data and instructions for the processor to access and manipulate. The devices described herein can include volatile and non-volatile memory. Examples of memory can include (i) random access memory (RAM), such as DRAM, SRAM, DDR RAM or other random access solid state memory devices, configured to store data and instructions temporarily; (ii) read-only memory (ROM) configured to store data and instructions permanently (e.g., one or more portions of system firmware and/or boot loaders); (iii) flash memory, magnetic disk storage devices, optical disk storage devices, other non-volatile solid state storage devices, which can be configured to store data in electronic devices (e.g., universal serial bus (USB) drives, memory cards, and/or solid-state drives (SSDs)); and (iv) cache memory configured to temporarily store frequently accessed data and instructions. Memory, as described herein, can include structured data (e.g., SQL databases, MongoDB databases, GraphQL data, or JSON data). Other examples of memory can include (i) profile data, including user account data, user settings, and/or other user data stored by the user; (ii) sensor data detected and/or otherwise obtained by one or more sensors; (iii) media content data including stored image data, audio data, documents, and the like; (iv) application data, which can include data collected and/or otherwise obtained and stored during use of an application; and/or (v) any other types of data described herein.

As described herein, a power system of an electronic device is configured to convert incoming electrical power into a form that can be used to operate the device. A power system can include various components, including (i) a power source, which can be an alternating current (AC) adapter or a direct current (DC) adapter power supply; (ii) a charger input that can be configured to use a wired and/or wireless connection (which may be part of a peripheral interface, such as a USB, micro-USB interface, near-field magnetic coupling, magnetic inductive and magnetic resonance charging, and/or radio frequency (RF) charging); (iii) a power-management integrated circuit, configured to distribute power to various components of the device and ensure that the device operates within safe limits (e.g., regulating voltage, controlling current flow, and/or managing heat dissipation); and/or (iv) a battery configured to store power to provide usable power to components of one or more electronic devices.

As described herein, peripheral interfaces are electronic components (e.g., of electronic devices) that allow electronic devices to communicate with other devices or peripherals and can provide a means for input and output of data and signals. Examples of peripheral interfaces can include (i) USB and/or micro-USB interfaces configured for connecting devices to an electronic device; (ii) Bluetooth interfaces configured to allow devices to communicate with each other, including Bluetooth low energy (BLE); (iii) near-field communication (NFC) interfaces configured to be short-range wireless interfaces for operations such as access control; (iv) pogo pins, which may be small, spring-loaded pins configured to provide a charging interface; (v) wireless charging interfaces; (vi) global-positioning system (GPS) interfaces; (vii) Wi-Fi interfaces for providing a connection between a device and a wireless network; and (viii) sensor interfaces.

As described herein, sensors are electronic components (e.g., in and/or otherwise in electronic communication with electronic devices, such as wearable devices) configured to detect physical and environmental changes and generate electrical signals. Examples of sensors can include (i) imaging sensors for collecting imaging data (e.g., including one or more cameras disposed on a respective electronic device, such as a simultaneous localization and mapping (SLAM) camera); (ii) biopotential-signal sensors; (iii) IMUs for detecting, for example, angular rate, force, magnetic field, and/or changes in acceleration; (iv) heart rate sensors for measuring a user's heart rate; (v) peripheral oxygen saturation (SpO2) sensors for measuring blood oxygen saturation and/or other biometric data of a user; (vi) capacitive sensors for detecting changes in potential at a portion of a user's body (e.g., a sensor-skin interface) and/or the proximity of other devices or objects; (vii) sensors for detecting some inputs (e.g., capacitive and force sensors); and (viii) light sensors (e.g., ToF sensors, infrared light sensors, or visible light sensors), and/or sensors for sensing data from the user or the user's environment. As described herein biopotential-signal-sensing components are devices used to measure electrical activity within the body (e.g., biopotential-signal sensors). Some types of biopotential-signal sensors include (i) electroencephalography (EEG) sensors configured to measure electrical activity in the brain to diagnose neurological disorders; (ii) electrocardiography (ECG or EKG) sensors configured to measure electrical activity of the heart to diagnose heart problems; (iii) EMG sensors configured to measure the electrical activity of muscles and diagnose neuromuscular disorders; (iv) electrooculography (EOG) sensors configured to measure the electrical activity of eye muscles to detect eye movement and diagnose eye disorders.

As described herein, an application stored in memory of an electronic device (e.g., software) includes instructions stored in the memory. Examples of such applications include (i) games; (ii) word processors; (iii) messaging applications; (iv) media-streaming applications; (v) financial applications; (vi) calendars; (vii) clocks; (viii) web browsers; (ix) social media applications; (x) camera applications; (xi) web-based applications; (xii) health applications; (xiii) AR and MR applications; and/or (xiv) any other applications that can be stored in memory. The applications can operate in conjunction with data and/or one or more components of a device or communicatively coupled devices to perform one or more operations and/or functions.

As described herein, communication interface modules can include hardware and/or software capable of data communications using any of a variety of custom or standard wireless protocols (e.g., IEEE 802.15.4, Wi-Fi, ZigBee, 6LoWPAN, Thread, Z-Wave, Bluetooth Smart, ISA100.11a, WirelessHART, or MiWi), custom or standard wired protocols (e.g., Ethernet or HomePlug), and/or any other suitable communication protocol, including communication protocols not yet developed as of the filing date of this document. A communication interface is a mechanism that enables different systems or devices to exchange information and data with each other, including hardware, software, or a combination of both hardware and software. For example, a communication interface can refer to a physical connector and/or port on a device that enables communication with other devices (e.g., USB, Ethernet, HDMI, or Bluetooth). A communication interface can refer to a software layer that enables different software programs to communicate with each other (e.g., APIs and protocols such as HTTP and TCP/IP).

As described herein, a graphics module is a component or software module that is designed to handle graphical operations and/or processes and can include a hardware module and/or a software module.

As described herein, non-transitory computer-readable storage media are physical devices or storage medium that can be used to store electronic data in a non-transitory form (e.g., such that the data is stored permanently until it is intentionally deleted and/or modified).

### Authentication Management

The following section describes the architecture for managing authentication across device constellations, including the relationship between primary devices with user interfaces and secondary devices without authentication capabilities, along with the various components that enable secure credential transmission, such as cryptographic identifiers, privilege-based communication architectures, and state synchronization mechanisms. The section also presents a state machine for device authentication, example user actions for device authentication, and a block diagram of the system architecture including core services, authentication layers, and data management components.

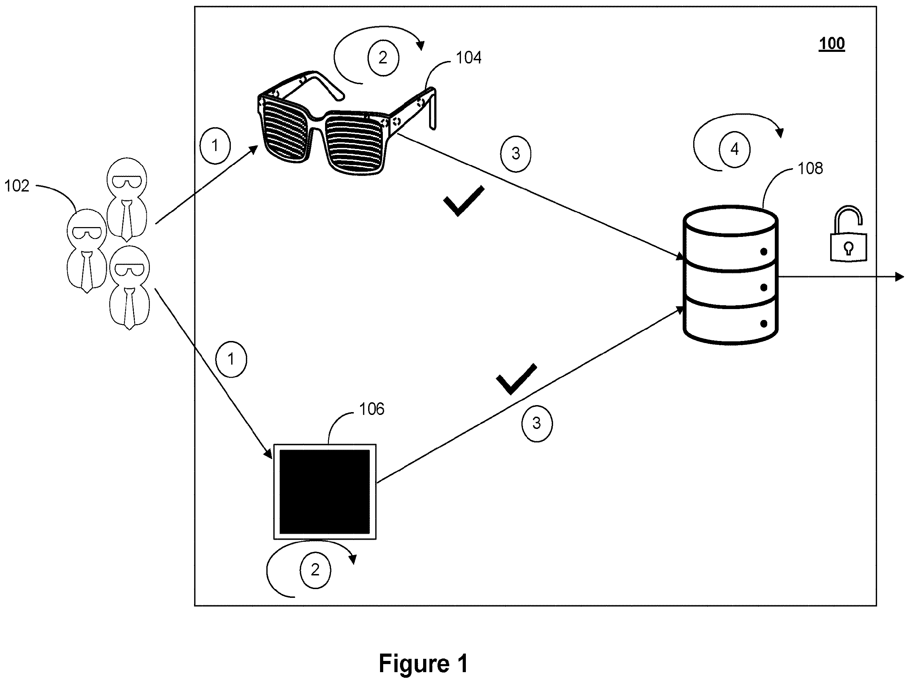

Figure 1 is a schematic diagram of an example system 100 for managing authentication across multiple devices, according to some embodiments. The system 100 includes a primary device (e.g., augmented reality (AR) glasses 104, a user device 106; sometimes referred to a high-privilege device) having a user interface. The user interface receives user authentication input from users 102. In some embodiments, the user device is a portal device. The system 100 also includes a secondary device (e.g., without a user interface for authentication), such as a storage unit 108 without a button or a user interface (sometimes referred to as a low-privilege device). The primary device receives authentication input (e.g., in step 1) through the user interface, derives (e.g., in step 2) a secondary authentication credential (e.g., a new PIN) based on the received authentication input, and transmits (e.g., in step 3) the secondary authentication credential to the secondary device (e.g., transmit the same PIN over to unlock the other device, transmit data securely to the less privileged device). The secondary device receives (e.g., in step 3) the secondary authentication credential from the primary device, and unlocks (e.g., in step 4) based on the received secondary authentication credential. The primary device has a higher privilege level than the secondary device for authentication operations. In some embodiments, the devices have the privilege to lock the constellation, but only certain devices have the privilege to unlock. In some embodiments, the higher privilege level devices perform authorization to initiate unlock operations for other devices, transmit authentication credentials, and modify system-wide authentication settings.

In some embodiments, the secondary device is configured to lock without receiving a command from the primary device. For example, the secondary device includes (or is in communication with) a button, which when pressed locks the device.

In some embodiments, each device in the system 100, regardless of privilege level, is configured to initiate a lock state for the system and propagate the lock state to other devices in the system. In some embodiments, only devices with higher privilege levels are configured/allowed to initiate unlock operations, and/or transmit authentication credentials needed for unlocking. For example, the secondary device, having a lower privilege level, may initiate system-wide lock operations, but may not initiate unlock operations or transmit authentication credentials. Some embodiments use hierarchical lock/unlock. In some embodiments, paired devices within the constellation mirror the behavior of the host device. For instance, if the host device is locked, all paired devices may automatically transition to a locked state. Some embodiments use hardcoded checks to verify which device is attempting to modify the lock state.

In some embodiments, the primary device verifies device identity before transmitting the secondary authentication credential. In some embodiments, the primary device and secondary device are each provisioned with unique cryptographic identifiers at manufacture. For example, the primary device uses its cryptographic identifier to establish its identity to the secondary device and verifies the cryptographic identity of the secondary device using the secondary device's cryptographic identifier before transmitting the secondary authentication credential. The secondary device uses its cryptographic identifier to establish its identity to the primary device and verifies the identity of the primary device using the primary device's cryptographic identifier before accepting the secondary authentication credential. In some embodiments, devices in a constellation are factory provisioned with a unique cryptographic identifier. This identifier is used to bootstrap device authentication when devices are communicating with each other, hence each is uniquely identified to each other. The receiver verifies the identity of the sender, and/or associates the appropriate, fixed, privilege level.

In some embodiments, the primary device uses the verified cryptographic identity of the secondary device to determine its predetermined privilege level, and/or establishes a private communication channel with the secondary device based on their respective cryptographic identifiers for transmitting the secondary authentication credential.

In some embodiments, the unique cryptographic identifiers are used to generate shared encryption keys between the primary and secondary devices for securing the transmission of the secondary authentication credential and authenticate each device's identity during each communication session for transmitting the secondary authentication credential.

In some embodiments, the secondary device compares the verified cryptographic identity of the primary device against a stored list of higher-privileged devices, and/or accept the secondary authentication credential only when the primary device's identity matches a higher-privileged device in the stored list.

In some embodiments, the system 100 prevents replay attacks in authentication credential transmission between devices.

In some embodiments, the system 100 further includes a secure communication channel between the primary device and the secondary device. The secure communication channel prevents man-in-the-middle attacks (e.g., like other Wi-Fi protocols).

In some embodiments, the primary device establishes a secure communication channel with the secondary device before transmitting the secondary authentication credential, and/or encrypt the secondary authentication credential using a shared key specific to the communication session (e.g., symmetric key encryption from a shared key from the unique cryptographic identifiers).

In some embodiments, the primary device supports a plurality of authentication methods including biometric and/or PIN-based authentication.

In some embodiments, the primary device is configured to receive a plurality of types of authentication input including biometric and PIN-based input through the user interface, and/or generate a common synthetic password format from any received authentication input type for deriving the secondary authentication credential.

In some embodiments, the system 100 manages device replacement by enabling pairing of a replacement device, generating new authentication credentials for the replacement device, and/or maintaining security of user data during replacement.

In some embodiments, the system 100 authenticates a replacement device through the primary device using a new user authentication input, derives a new secondary authentication credential for the replacement device, and/or maintain existing privilege levels during the replacement process.

In some embodiments, the secondary device includes a storage unit containing user data, and/or security controls that restrict access to the user data based on the secondary authentication credentials. The secondary device maintains encryption of the user data while locked, and/or allow access to the user data only after successful validation of the secondary authentication credential.

In some embodiments, the system 100 includes an augmented reality device constellation, the primary device includes augmented reality glasses, and the secondary device includes a compute unit without a user interface.

In some embodiments, the system 100 is configured with rate-limiting mechanisms that (i) track failed authentication attempts, (ii) implement progressive delays between authentication attempts, and can trigger a permanent lock state requiring factory reset after exceeding a threshold of failed attempts (e.g., 5 attempts). For example, the system 100 may choose to incorporate a rate-limiting mechanism, which may eventually permanently lock the device, in a way that recovery/factory-reset is required to reuse the device.

In some embodiments, the system 100 implements a privilege-based communication architecture including a communication service (e.g., the actual propagation of the states can be handled by intra-link between devices; privileges afforded to any device are part of the system 100 may be design and fixed). The communication device establishes secure communication channels between constellation devices, maintains a privilege level registry of all connected devices, and/or validates device privileges before routing authentication commands. Each device's privilege level is cryptographically signed during manufacture, verified during each inter-device communication, and used to determine permitted authentication operations. The privilege level registry is synchronized across all constellation devices, updates automatically when devices join or leave the constellation, and/or enforces hierarchical authentication flow based on stored privilege levels.

In some embodiments, the system 100 implements a unified authentication service including a system-level authentication controller, which operates with elevated system account privileges, manages multiple authentication input methods, and/or coordinates with the authentication backend service. A synthetic password generator receives authentication inputs from multiple sources, converts varied authentication inputs into standardized synthetic passwords, and/or securely distributes synthetic passwords to authorized constellation devices. The authentication backend service validates synthetic passwords against stored credentials, maintains authentication session states, and/or coordinates with the privilege-based communication architecture to enforce access controls. In some embodiments, only services at the system-account level are bestowed the permissions to capture and deliver a PIN or biometrics to the backend authentication service. In some embodiments, synthetic passwords are used for authentication, and the passwords are securely shared between devices.

In some embodiments, the system 100 implements a unified locking mechanism, which includes a lock state controller that maintains a synchronized lock state across the constellation, processes lock commands from any authenticated device, and manages state propagation to newly connected devices. Each device maintains a local copy of the constellation lock state, a timestamp of its last state synchronization, and a queue of pending state updates. Upon device reconnection, the device compares its local state timestamp with other constellation devices, adopts the most recent valid lock state (e.g., a lock state deemed valid by the higher privilege device or the highest privilege device), and processes any pending state updates in chronological order. In some embodiments, the constellation operates on a best effort basis. In some embodiments, lower privileged devices are informed regarding the state of lock on reconnection, which implies state synchronization, and the higher privileged device (or the highest privilege device) is the device the user interacts with. In some embodiments, if the higher privilege device (or the highest privilege device) considers the constellation locked, the constellation is assumed to be locked.

In some embodiments, the system 100 implements a configurable enterprise security framework, which includes a policy controller that manages enterprise-defined authentication policies, enforces authentication method restrictions, and coordinates multi-factor authentication requirements. The policy controller maintains (i) a registry of allowed authentication methods, (ii) backup authentication mechanism configurations, and (iii) certificate validation requirements. Authentication attempts are validated against enterprise policies, may need to satisfy one or more security requirements, and/or are logged for enterprise security auditing. In some embodiments, an enterprise policy may disable biometrics entirely, or enable a backup escrow user/login, use certificates, require two-factor authentication, and so on. Some embodiments use more than one authentication method and/or security requirement.

In some embodiments, the system 100 implements a secure device replacement mechanism, which includes a transition controller that interfaces with a cloud account service, manages authority transfer procedures, and/or coordinates credential updates. When the primary device (or the higher privileged device) is replaced, the cloud service validates the replacement request, a secure channel is established between old and new devices, authority is transferred via encrypted private random values. Replacing the highest privileged device can require sharing a private random value (e.g., through a Meta Account) to the new device. Lower-privileged devices are automatically reconfigured. The constellation maintains security by continuing normal operation during the transition, validating all devices against new credentials, and/or implementing automatic recovery procedures if the transition fails.

In some embodiments, the system 100 implements a resilient constellation management system including a state management controller that tracks device connection states, manages authentication state synchronization, and/or coordinates credential lifecycles. When a device disconnects, the constellation maintains secure operation, authentication states are preserved, and reconnection procedures are prepared. Upon device reconnection, authentication states are automatically synchronized, pending operations are processed, and/or obsolete credentials are securely removed. In some embodiments, as part of the unpairing/factory reset process the device is removed from the constellation.

In some embodiments, the system 100 implements an adaptive security mechanism including a security controller that monitors authentication attempts across the constellation of devices, maintains a shared counter of failed authentication attempts, calculates progressive delay periods (e.g., every two minutes followed by every 5 minutes, then every 30 minutes, then every 4 hours, and so on) between allowed authentication attempts based on the failed attempt counter, and/or broadcasts security state updates to all constellation devices. Each device in the constellation synchronizes its local failed attempt counter with the security controller, enforces the calculated delay periods before accepting new authentication attempts, and/or enter a permanent lock state requiring factory reset when the shared counter exceeds a predetermined threshold. The permanent lock state propagates across all constellation devices, prevents any further authentication attempts, and can only be cleared through a factory-authorized reset process, for example.

Although Figure 1 shows a system with two privilege levels (a primary device and a secondary device), in some embodiments, the system includes more than two privilege levels, creating a multi-tiered hierarchy where different devices have varying degrees of authentication authority. For example, a constellation may include a highest-privilege device capable of unlocking all other devices, one or more intermediate-privilege devices that can unlock certain lower-privilege devices but not others, and lowest-privilege devices that can only initiate lock operations. Additionally, although Figure 1 shows a secondary device without a user interface, in some embodiments, a secondary device includes a user interface. The user interface for the secondary device may be limited in capability compared to the primary device, or the secondary device may be configured to not accept direct authentication input through its user interface despite having one. Moreover, although Figure 1 shows a single primary device transmitting credentials to a single secondary device, in some embodiments, the constellation may include multiple primary devices, each capable of independently authenticating and unlocking secondary devices. In some embodiments, the privilege levels and authentication capabilities of devices within the constellation may be configurable based on user preferences, enterprise policies, or the specific use case of the device constellation.

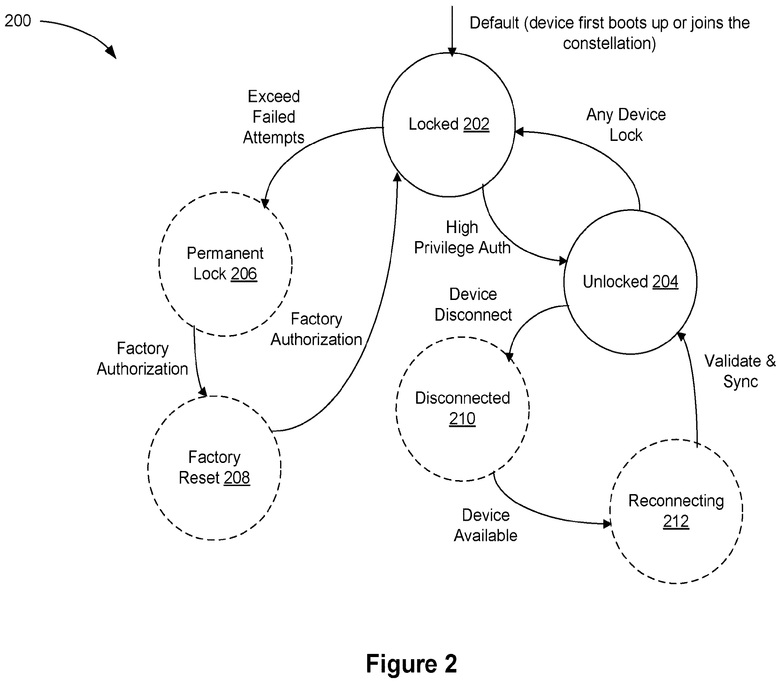

Figure 2 is a diagram of an example state machine 200 for device authentication, according to some embodiments. The state machine may be implemented in the primary devices and the secondary devices described above in reference to Figure 1, according to some embodiments. Locked 202 is a default security state where access to device functions and data is restricted. Unlocked 204 allows normal device operation and access to protected features. Permanent lock 206 is an irrecoverable security state requiring factory intervention. Factory reset 208 wipes the device and restores initial settings. Disconnected 210 maintains security while temporarily separated from constellation.

Reconnecting 212 reestablishes constellation membership. Initial state to locked occurs at device startup or first constellation join. Locked 202 to unlocked 204 requires high-privilege device authentication. Unlocked 204 to locked 202 can be triggered by any device. Locked 202 to permanent lock 206 happens after exceeding failed authentication attempts. Permanent lock 206 to factory reset 208 requires factory authorization. Factory reset 208 returns to locked 202. Unlocked 204 to disconnected 210 occurs when device leaves constellation range. Disconnected 210 to reconnecting 212 triggers when device returns to range. Reconnecting 212 to unlocked 204 completes after credential validation and state synchronization. Throughout transitions, the devices maintain privilege hierarchy and security state synchronization across the constellation.

In some embodiments, high-privilege devices (e.g., AR Glasses) can initiate both lock and unlock operations, transmit authentication credentials, manage device pairing and replacement, verify device identities, and/or support multiple auth methods (PIN, biometric). In some embodiments, low-privilege devices (e.g., a device without a user interface) can only initiate lock operations, cannot unlock independently, receive and/or validate credentials, maintain local security state, and/or protect stored user data. In some embodiments, all devices support factory-provisioned cryptographic IDs, maintain synchronized lock states, enforce rate-limiting and security policies, handle connection or disconnection gracefully, and/or participate in secure communication.

Although Figure 2 shows a state machine with six states (locked, unlocked, permanent lock, factory reset, disconnected, and reconnecting), in some embodiments, the state machine may include additional states or fewer states depending on the security requirements of the device constellation. For example, the state machine may include a temporary lock state that automatically transitions to an unlocked state after a predetermined time period elapses. In some embodiments, the state machine includes a reduced functionality state that allows access to a subset of device features while restricting access to sensitive data, e.g., enabling emergency functionality such as placing calls or displaying medical information without full authentication. In some embodiments, the state machine includes a guest mode state that provides limited access to device functionality for users other than the primary authenticated user. In some embodiments, the state machine omits the permanent lock state for devices where factory reset is not desirable or practical, e.g., instead implementing extended lockout periods with progressively increasing delays. In some embodiments, the transitions between states are configurable, e.g., based on enterprise policies, user preferences, or the specific use case of the device constellation. For example, an enterprise policy may require that the transition from unlocked to locked occurs automatically after a shorter period of inactivity than a consumer configuration. Certain state transitions may require multi-factor authentication, such as requiring both biometric input and PIN entry to transition from locked to unlocked. In some embodiments, the state machine includes parallel states where different components or data partitions within a single device maintain independent lock states, e.g., enabling scenarios where certain sensitive data remains locked while other device functionality is accessible.

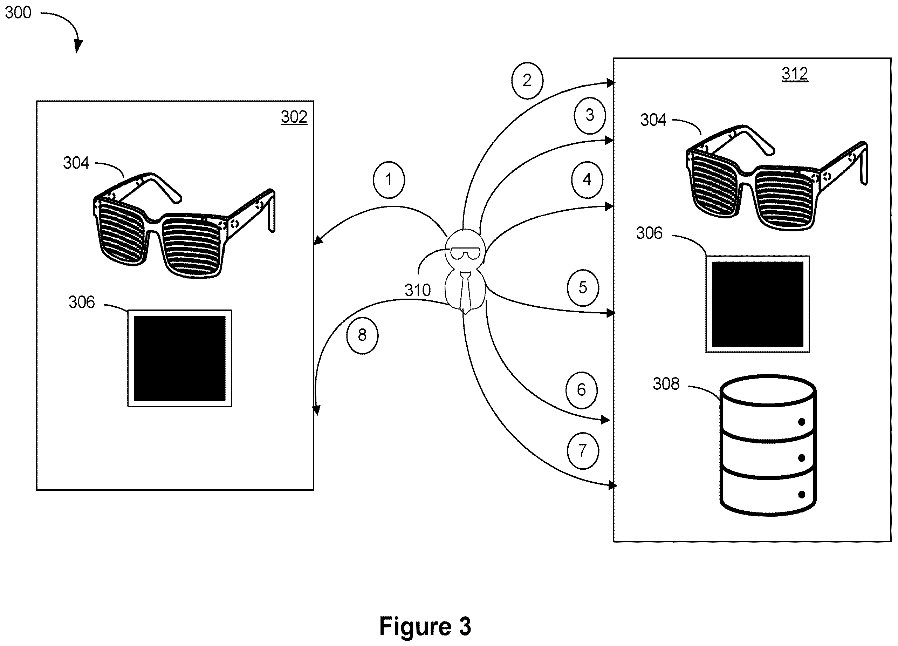

Figure 3 shows a schematic diagram for example user actions 300 for device authentication, according to some embodiments. As an example, a user 310 approaches or wears a high-privilege or primary device 302 (e.g., AR glasses 304, an interactive screen display device 306) and enters a PIN and/or uses biometric authentication (e.g., in step 1). In this example, this unlocks the device and/or its compute unit (e.g., the unlocked 204). The user can press a lock button (e.g., in step 2) on any device 312 (e.g., a low privilege device, such as a storage unit 308 without a lock button or a user interface, or a high-privilege device 302). This can cause the device to transition to a locked state (e.g., the locked 202). If the user enters incorrect codes repeatedly (e.g., in step 4), the device can lock permanently (e.g., the permanent lock 206), requiring a factory reset. If the user moves out of range from the device (e.g., in step 5), such as walking away from their compute unit, the device can automatically lock and/or disconnect (e.g., the disconnected 210), then reconnect (e.g., the reconnecting 212) and /or synchronize when the user returns (e.g., in step 6). The user replacing their device (e.g., in step 7) can transfer control through their account. When replacing a compute unit, the user can authenticate the new unit through their existing devices with a new PIN. The user data remains secure during device transitions. While a user needs their glasses to unlock the system, they can lock any device from either type of device. The primary device(s) 302 serve as the master key, but security actions work from both types of devices. The user can also add (e.g., in step 8) a new device to constellation, which may require device authentication on the primary devices 302, which establishes device identity and privileges.

Although Figure 3 shows specific user actions numbered 1 through 8, in some embodiments, additional user actions or alternative sequences of actions are supported. For example, in some embodiments, the system receives a partial lock input that restricts access to sensitive data while maintaining basic device functionality, rather than a full system-wide lock. In some embodiments, the system receives an input designating a temporary trusted user who can unlock certain devices within the constellation for a limited time period or session. In some embodiments, the user actions shown in Figure 3 are performed through different input modalities depending on the device, such as voice commands, gaze-based selection, touch input, or physical button presses. In some embodiments, certain user actions require confirmation through a secondary input before execution. For example, initiating a factory reset or adding a new device to the constellation may require the system to receive a confirmation input through a second authentication input or through a confirmation prompt on another device in the constellation. In some embodiments, the system provides feedback to the user regarding the status of authentication operations across the constellation, such as visual indicators on each device showing lock state, audio confirmations when devices successfully unlock, or haptic feedback when authentication fails. In some embodiments, the system queues user actions when a device is temporarily disconnected and executes them upon reconnection. For example, if the system receives a lock command while a secondary device is out of range, the lock command is stored and transmitted to the secondary device when it reconnects to the constellation.

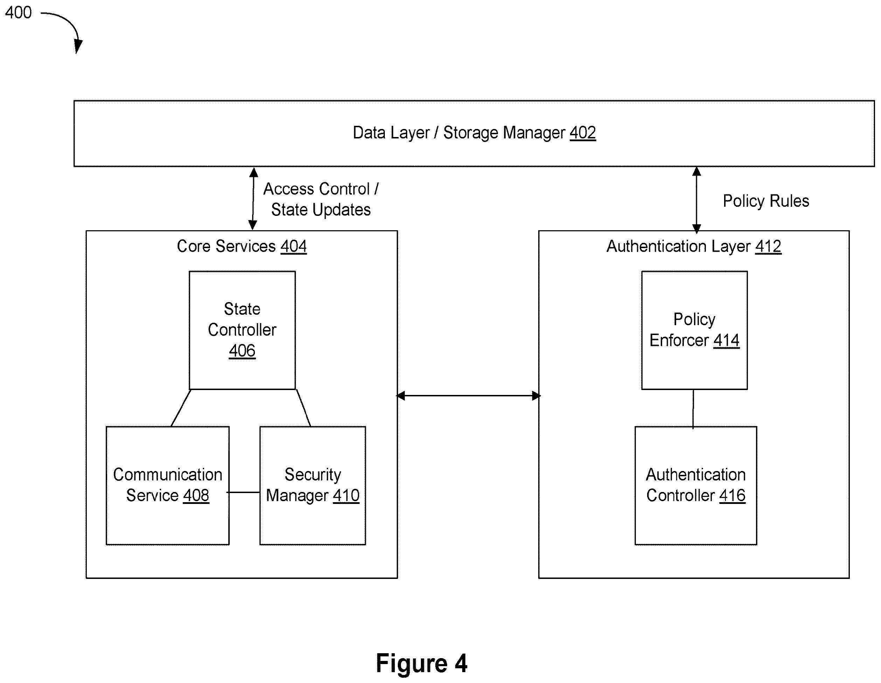

Figure 4 shows a block diagram of an example system 400 for device authentication, according to some embodiments. The system includes core services 404, an authentication layer 412, and/or a data layer or storage manager 402. The core services 404 includes a state controller managing device states, a communication service 408 handling secure messaging, and a security manager 410 verifying identities and privileges. The authentication layer 412 includes an authentication controller 416 processing inputs and generating credentials, and a policy enforcer 414 implementing security rules. The data layer or storage manager 402 encrypts data and/or controls access. The security manager 410 validates all module interactions. The state controller 406 updates the storage manager 402 on state changes. The communication service 408 transmits credentials between devices. The policy enforcer 414 sets rules for authentication controller and storage manager.

For security, devices can use factory-provisioned cryptographic identities to establish secure channels with session-specific encryption keys. The system may require freshness checks and chronological timestamp processing to prevent replay attacks. In some embodiments, the security manager 410 validates interactions between modules. The state controller 406 notifies the storage manager 402 of state changes. The communication service 408 transmits credentials and states between devices. The policy enforcer 414 sets rules that the authentication controller 416 and the storage manager 402 follow. To prevent man-in-the-middle attacks, devices can use factory-provisioned cryptographic identities to establish secure channels. Each communication session creates new encryption keys, for example. For replay attack prevention, the system 400 requires freshness checks on authentication messages and processes state updates in chronological order using timestamps, for example.

Although Figure 4 shows a system architecture with specific components including core services, an authentication layer, and a data layer, in some embodiments, the system architecture includes additional components, fewer components, or different arrangements of components, e.g., depending on the security requirements and device capabilities within the constellation. In some embodiments, the authentication layer includes additional modules for handling specific authentication methods such as biometric processing modules, PIN validation modules, or certificate-based authentication modules. In some embodiments, the core services include additional controllers for managing specific aspects of constellation operation, such as a pairing controller for managing device enrollment, a recovery controller for handling device replacement scenarios, or a policy synchronization controller for distributing enterprise security policies across the constellation. In some embodiments, the data layer includes separate storage managers for different types of data, such as a credential storage manager for authentication credentials, a state storage manager for device states, and a user data storage manager for protected user content. This may enable more granular access control and data protection within the constellation. In some embodiments, the system architecture is distributed across multiple devices within the constellation, with different devices hosting different components based on their capabilities and privilege levels. For example, a high-privilege device may host the authentication controller and policy enforcer, while lower-privilege devices may host only local instances of the state controller and storage manager. In some embodiments, the system architecture includes redundant components. This may ensure continued operation if a device becomes disconnected or unavailable.

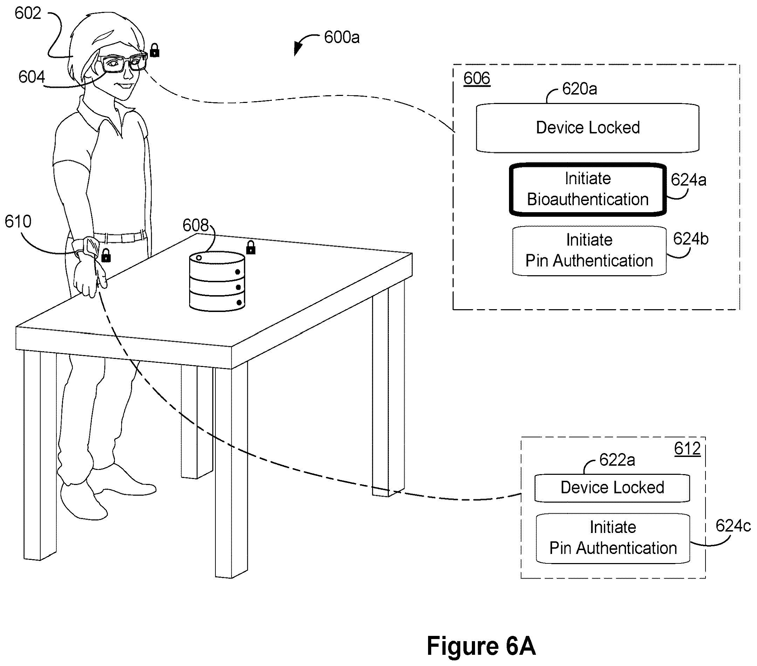

Figures 6A-6E illustrate an example method for managing authentication across multiple devices in accordance with some embodiments. Specifically, the sequence illustrates a user 602 interacting with various authentication procedures to unlock and lock various devices. These devices include a head-wearable device 604 and a wrist-wearable device 610, both worn by the user, as well as a storage device 608.

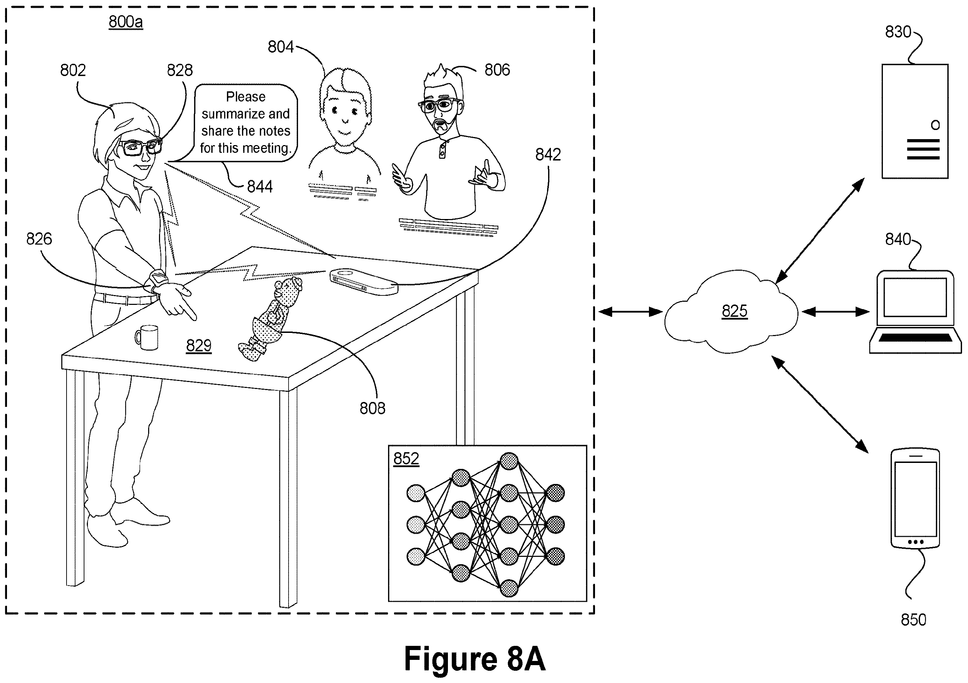

Turning to Figure 6A, which illustrates scene 600a in which a user 602 is standing in front of a table that has a storage device 608 on it, while wearing a head-wearable device 604 and a wrist-wearable device 610. These devices are communicatively coupled to each other and/or other devices (e.g., a mobile device 850; Figure 8A). In some embodiments, these devices form the device constellation. The head-wearable device 604 and the wrist-wearable device 610 are configured to receive sensor data via one or more sensors, such as image sensors to capture image data (e.g., capture bio authentication data or gaze data). In accordance with some embodiments, the wrist-wearable device 610 is configured to receive additional sensory data via one or more sensors, such as EMG sensors or a visual touchscreen display.

As used herein, the term "constellation" refers to a group of two or more devices that are communicatively coupled to each other and configured to operate together. A constellation may include devices with different privilege levels, including one or more primary devices (high-privilege devices) having user interfaces configured to receive user authentication input, and one or more secondary devices (low-privilege devices) that may lack user interfaces for authentication. Devices within a constellation maintain synchronized lock states, enforce rate-limiting and security policies, handle connection or disconnection gracefully, and participate in secure communication using factory-provisioned cryptographic identifiers.

As used herein, the term "secondary authentication credential" refers to a credential derived from a primary authentication input received at a primary device and transmitted to one or more secondary devices to enable unlocking of those secondary devices. In some embodiments, the secondary authentication credential is derived from a PIN, biometric input, or other authentication input received at the primary device. In some embodiments, the secondary authentication credential is generated using a synthetic password format that standardizes varied authentication input types. In some embodiments, the secondary authentication credential is encrypted using a shared key specific to the communication session before transmission to the secondary device.

As used herein, the term "lock state" or "locked state" refers to a security state where access to device functions and data is restricted. The lock state may be a default security state that devices enter at startup or upon first joining a constellation. As used herein, the term "unlock state" or "unlocked state" refers to a state that allows normal device operation and access to protected features. Transitioning from a locked state to an unlocked state requires authentication, e.g., at the device or from a high-privilege device within the constellation.

In some embodiments, the head-wearable device 604 includes a presentation component for presenting visual content within a field-of-view 606 of the user 602 to update the user on the authentication status of the device and/or provide authentication options at the head-wearable device 604. For example, as shown in Figure 6A, the field-of-view 606 presents the user with visual content in the form of user interface elements, including a device status element 620 (e.g., device locked status element 620a) and at least one authentication element 624 (e.g., bioauthentication element 624a and pin authentication element 624b).

In some embodiments, the wrist-wearable device 610 includes a presentation component for presentation component for presenting visual content within a display 612 to update the user on the authentication status of the device and/or provide authentication options at the wrist-wearable device 610. In some embodiments, the authentication options available at the head-wearable device 604 may comprise the same or different authentication options as those available at the wrist-wearable device 610. For example, as shown in Figure 6A, the display 612 is presenting the user with visual content in the form of user interface elements, including a device status element 622 (e.g., device locked status element 622a) and at least one authentication element 624 (e.g., pin authentication element 624c).

In accordance with some embodiments, all three devices are currently locked, as indicated by the device locked status elements 620a and 622a, as well as the lock symbols located next to each device within Figure 6A. The user 602 selects the bioauthentication element 624a within the field-of-view 606. In some embodiments, selection of an element is detected based on input from the user including at least one of a hand-gesture, audio input, haptic input, and gaze detection.

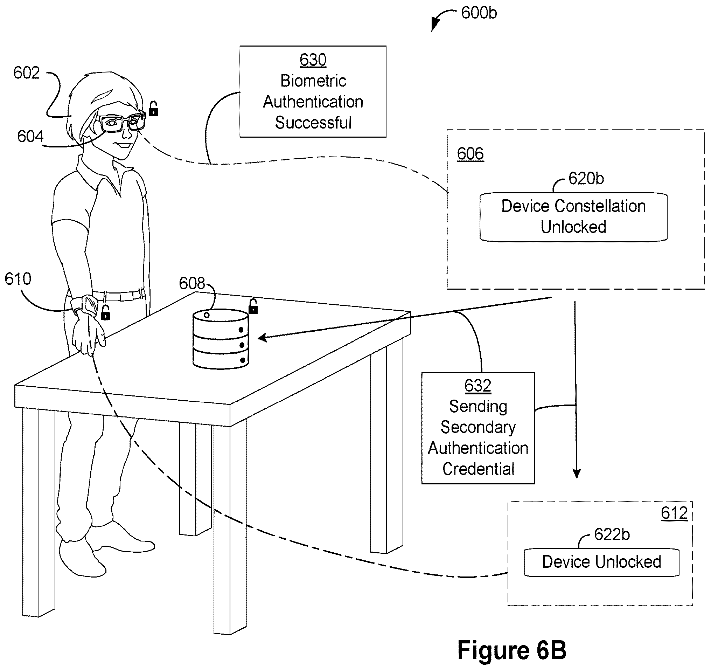

Figure 6B illustrates scene 600b in which the previously initiated bioauthentication process at the head-wearable device 604 has been completed successfully 630. Based on this successful bioauthentication process, the head-wearable device is unlocked, as indicated by the unlocked icon next to the head-wearable device in Figure 6B. In some embodiments, the head-wearable device has a privilege level that is higher than the privilege level of any of the other devices within the constellation (e.g., the head-wearable device 604 and the storage device 608). A secondary authentication credential is generated and sent 632 to the other devices within the constellation with lower privilege levels (e.g., the head-wearable device 604 and the storage device 608), causing the other devices to unlock, as visualized by the unlock icons next to these two devices.

Biometric authentication methods may include iris scanning, facial recognition, fingerprint recognition, voice recognition, retinal scanning, and/or any other biometric data that can be captured by sensors of the primary device. In some embodiments, the head-wearable device includes one or more sensors configured to capture biometric authentication data, such as image sensors to capture iris data, gaze data, or facial features. In some embodiments, the wrist-wearable device includes biopotential-signal sensors configured to capture biometric data, such as electrocardiography (ECG or EKG) sensors configured to measure electrical activity of the heart, or electromyography (EMG) sensors configured to measure the electrical activity of muscles. In some embodiments, biometric authentication is performed using data from multiple sensors and/or multiple devices within the constellation to improve authentication accuracy and security.

In accordance with some embodiments, based on the device constellation being unlocked, the device status element 620 of the field-of-view 606 of the head-wearable device is updated to a device constellation unlocked status element 620b. The device status element 622 of the display 612 of the wrist-wearable device 610 has also been updated to device unlocked status element 622b.

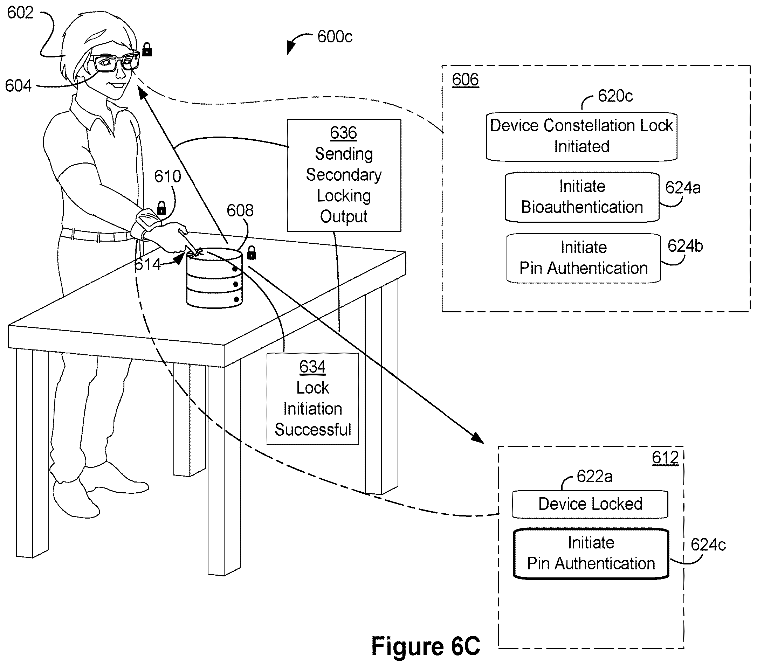

Figure 6C illustrates scene 600c in which the previously unlocked device constellation has been locked by the user 602 based on a lock initiation input occurring at any device in the constellation, regardless of privilege level. For example, in Figure 6C, the user 602 presses 614 a button on the storage device 608. Based on this successful lock initiation 634 input, the storage device 608 generates and sends 636 a secondary locking output to the other devices in the constellation (e.g., the head-wearable device 604 and the wrist-wearable device 610), causing the other devices to lock. In some embodiments, lock initiation input may include at least one of a hand-gesture, audio input, haptic input, and gaze detection directed at any of the devices within the constellation.

In accordance with some embodiments, based on the device constellation being locked, the device status element 620 of the field-of-view 606 of the head-wearable device is updated to a device constellation locked status element 620c. The device status element 622 of the display 612 of the wrist-wearable device 610 has also been updated to device locked status element 622a. In accordance with some embodiments, the field-of-view 606 and the display 612 have both been updated to display the same authentication elements described with respect to Figure 6A. The user has selected the pin authentication element 624c at the wrist-wearable device for the next authentication attempt.

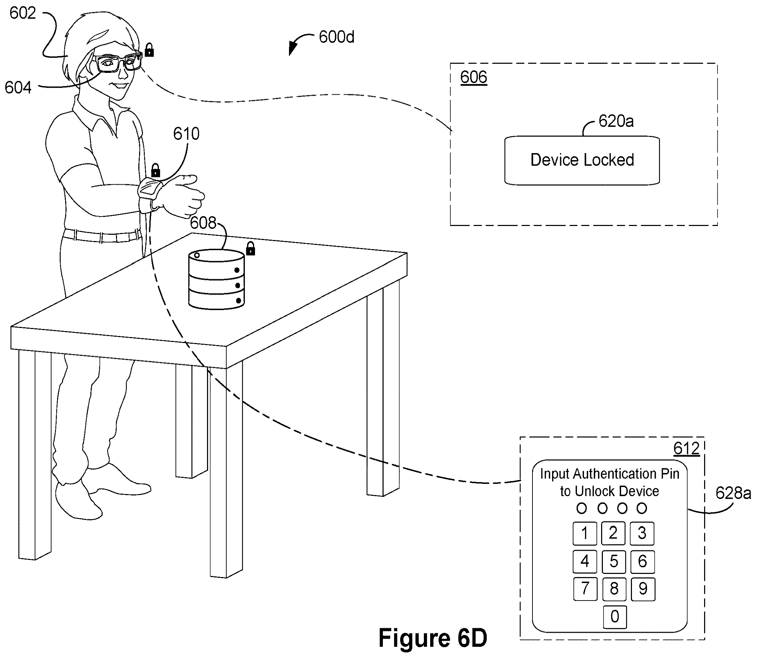

Figure 6D illustrates scene 600d in which the pin authentication process at the wrist-wearable device 610 has been initiated. The display 612 of the wrist-wearable device has been updated to present a pin authentication interface 628a for the user to interact with to input a pin to unluck the device. In some embodiments the pin comprises a series of numbers, preselected by the user as the unlock pin for a device or for the entire device constellation. In some embodiments, the pin required to successfully authenticate at the head-wearable device is distinct from the pin required to successfully authenticate at the wrist-wearable device. In some embodiments, the pin authentication is replaced with any kind of knowledge-based authentication (e.g., password, etc.). The device status element 622 of the field-of-view 606 of the head-wearable device is updated to device locked status element 620a.

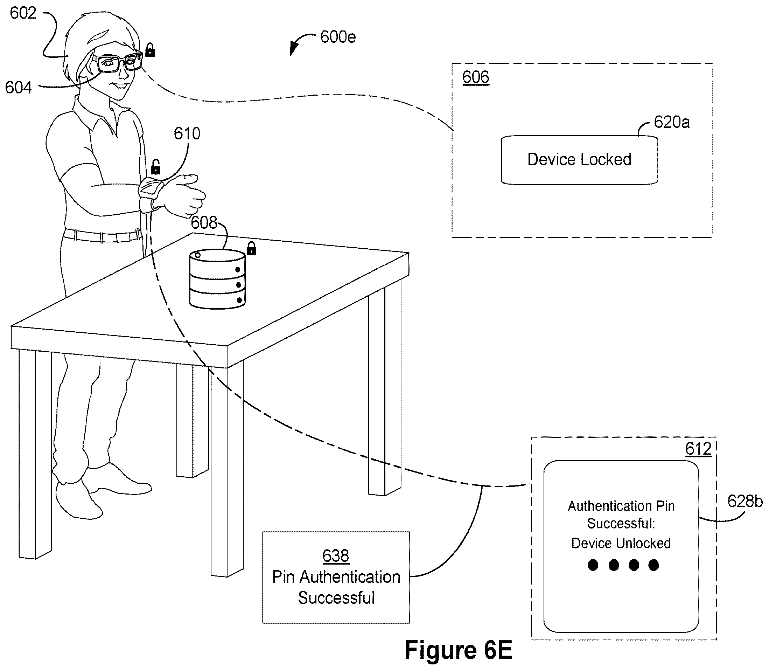

Figure 6E illustrates scene 600e in which the previously initiated pin authentication process at the wrist-wearable device 610 was successful 638. Based on this successful pin authentication process, the wrist-wearable device 610. In some embodiments, the head-wearable device and the storage device 608 have a privilege level that is higher than the privilege level of the wrist-wearable device 610, where the authentication was initiated and successfully completed. Based on a determination that the other devices within the constellation (e.g., the head-wearable device 604 and the storage device 608) have a higher privilege level than the device initiating the authentication, no secondary authentication credential is transmitted and the other devices remain locked. In some embodiments, a secondary authentication credential is generated and sent 632 to the other devices within the constellation (e.g., the head-wearable device 604 and the storage device 608), however, based on a determination that the other devices have a higher privilege level than the device initiating the authentication, the other devices remain locked.

In accordance with some embodiments, based on the wrist-wearable device being unlocked, the display 612 of the wrist-wearable device 610 has been updated to present successful pin authentication interface 628b.

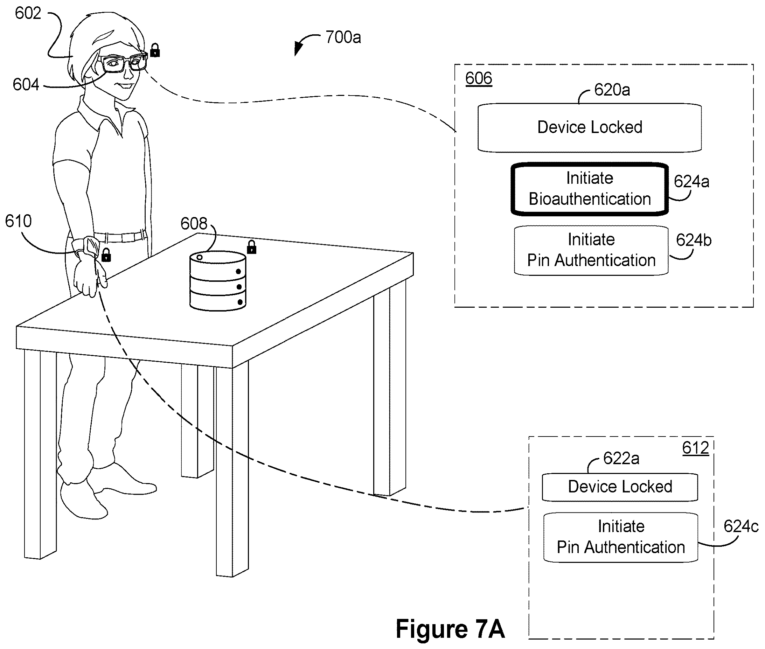

Figures 7A-7F illustrate an example method for managing authentication across multiple devices via rate-limiting mechanisms in accordance with some embodiments. Specifically, the sequence illustrates a user 602 interacting with various authentication procedures to attempt to unlock various devices where progressive rate-limiting mechanisms and eventually a permanent lock status are initiated. These devices include a head-wearable device 604 and a wrist-wearable device 610, both worn by the user, as well as a storage device 608.

Turning to Figure 7A, which illustrates scene 700a in which a user 602 is standing in front of a table that has a storage device 608 on it, while wearing a head-wearable device 604 and a wrist-wearable device 610. These devices are configured, comprised, and coupled as described with regard to Figures 6A-6E. In accordance with some embodiments, all three devices are currently locked, as indicated by the device locked status elements 620a and 622a, as well as the lock symbols located next to each device within Figure 7A. The field-of-view 606 and display 612 are presenting the same elements as previously described with respect to Figure 6A. In accordance with some embodiments, the user 602 selects the bioauthentication element 624a within the field-of-view 606.

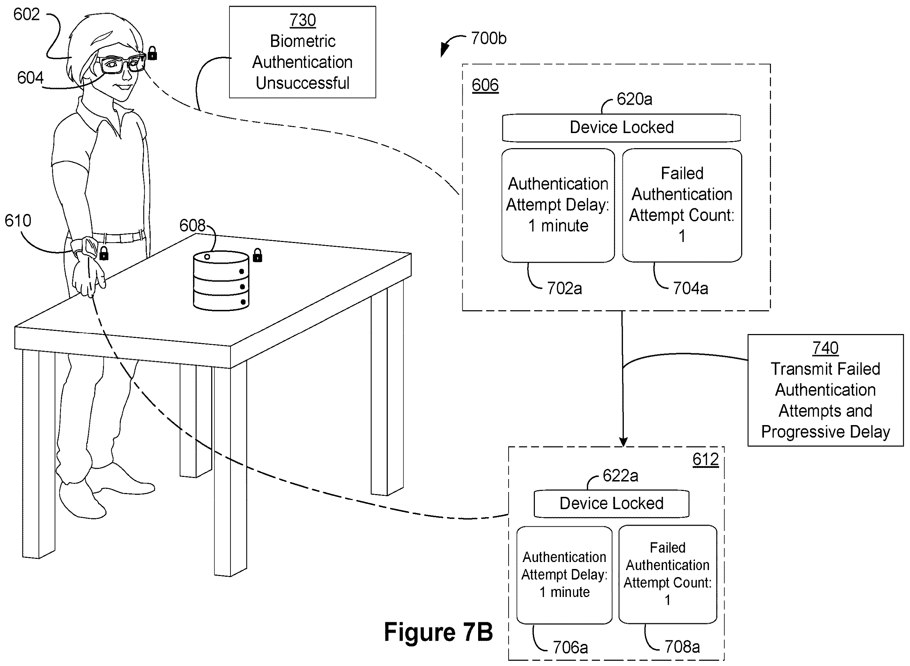

Figure 7B illustrates scene 700b in which the previously initiated bioauthentication process at the head-wearable device 604 has been completed unsuccessfully 730. Based on this unsuccessful bioauthentication attempt, the head-wearable device remains locked, as indicated by the unlocked icon next to the head-wearable device in Figure 7B. a count of failed authentication attempts (e.g., "1") and a progressive delay (e.g., "1 minute") is generated and transmitted 740 to the other devices within the constellation. In some embodiments, the transmitted failed authentication attempt count, and progressive delay are synchronized across the constellation, such that a failed authentication attempt at any device would contribute to the count. In some embodiments, a successful authentication attempt at any device within the constellation resets the failed authentication attempt count. In some embodiments, the progressive delay is generated based on the failed authentication attempt count such that the greater the number of failed authentication attempts, the greater the generated progressive delay.

In some embodiments, a progressive delay refers to an increasing time period that must elapse between successive authentication attempts following one or more failed authentication attempts. The progressive delay may be calculated based on a count of failed authentication attempts, such that a greater number of failed authentication attempts results in a longer delay period before a subsequent authentication attempt is permitted. For example, a first failed authentication attempt may result in a one-minute delay, a second failed authentication attempt may result in a five-minute delay, a third failed authentication attempt may result in a thirty-minute delay, and a fourth failed authentication attempt may result in a four-hour delay. In some embodiments, the progressive delay periods follow an exponential backoff pattern, a linear increase pattern, or a custom pattern defined by system configuration or enterprise policy. In some embodiments, the progressive delay is enforced across all devices in the constellation, such that a failed authentication attempt at any device contributes to a shared failed attempt counter and triggers a progressive delay that applies to authentication attempts at all devices in the constellation. In some embodiments, the progressive delay is reset upon a successful authentication attempt at any device within the constellation, or after a predetermined period of time has elapsed without any authentication attempts.

In accordance with some embodiments, based on the unsuccessful authentication attempt, the field-of-view 606 of the head-wearable device 604 is updated to present an authentication delay element 702 (e.g., one minute authentication delay element 702a) and failed authentication count element 704 (e.g., one failed authentication element 704a). The display 612 of the wrist-wearable device 610 has also been updated to present a corresponding authentication delay element 706 (e.g., one minute authentication delay element 706a) and corresponding failed authentication count element 708 (e.g., one failed authentication element 708a) to the elements presented in the field-of-view 606 of the head-wearable device 604. In accordance with some embodiments, the user 602 is unable to initiate a new authentication attempt until the progressive delay time period has elapsed. For example, in Figure 7B, the user 602 cannot attempt another authentication until one minute has elapsed since the failed bioauthentication attempt.

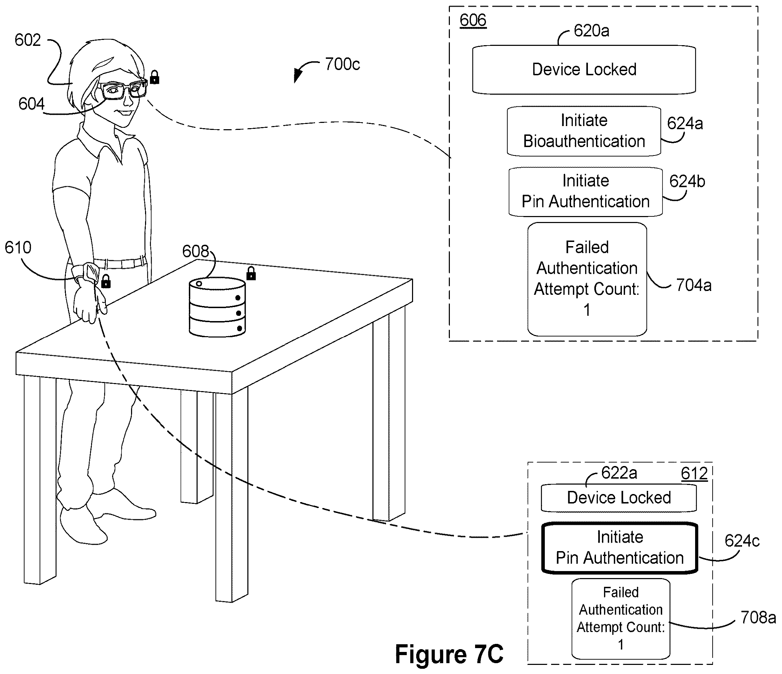

Figure 7C illustrates scene 700c in which the previous one minute progressive delay time period has elapsed. The device remains locked, but authentication options are once again presented to the user via the field-of-view 606 and the display 612. In accordance with some embodiments the field-of-view 606 and the display 612 have been updated to no longer display an authentication delay element 702 or 706 respectively, however they still display the authentication count elements 704a and 708a, respectively. They have also been updated to display the same authentication elements as described earlier with respect to Figure 6A. In accordance with some embodiments, the user 602 selects the pin authentication element 624c within the display 612 to initiate a pin authentication at the wrist-wearable device 610.

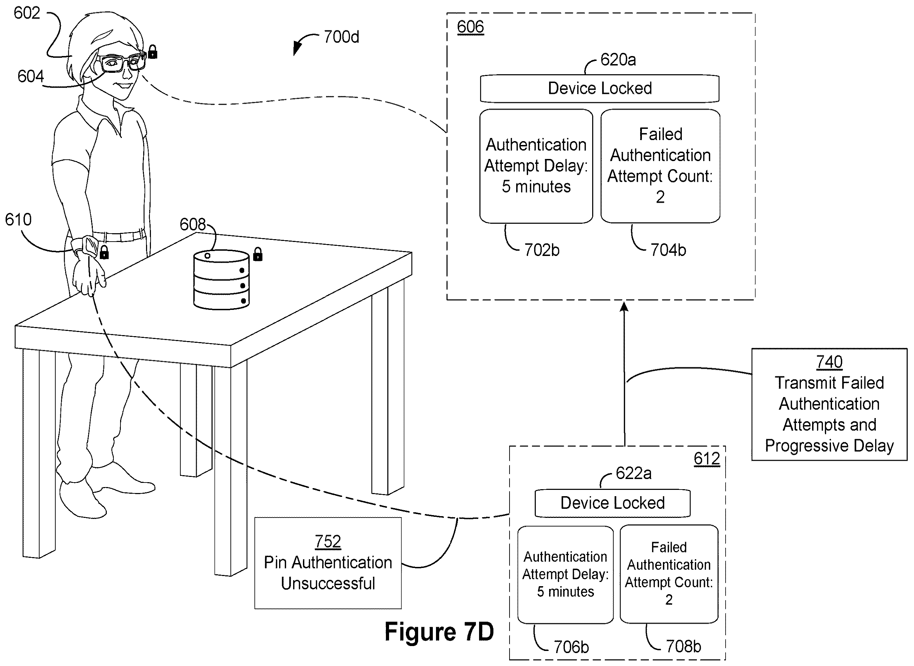

Figure 7D illustrates scene 700d in which the previously initiated pin authentication process at the wrist-wearable device 610 has been completed unsuccessfully 752. Based on this unsuccessful pin authentication attempt, the wrist-wearable device 610 remains locked. The count of failed authentication attempts are generated and transmitted 740 to the other devices within the constellation. In accordance with some embodiments, based on the unsuccessful authentication attempt, the field-of-view 606 of the head-wearable device 604 is updated to present an authentication delay element 702 (e.g., five minute authentication delay element 702b) and failed authentication count element 704 (e.g., two failed authentications element 704b). The display 612 of the wrist-wearable device 610 has also been updated to present a corresponding authentication delay element 706 (e.g., five minute authentication delay element 706b) and corresponding failed authentication count element 708 (e.g., two failed authentications element 708a) to the elements presented in the field-of-view 606 of the head-wearable device 604. In accordance with some embodiments, the user 602 is unable to initiate a new authentication attempt until the progressive delay time period has elapsed. For example, in Figure 7D, the user 602 cannot attempt another authentication until five minutes have elapsed since the failed pin attempt.

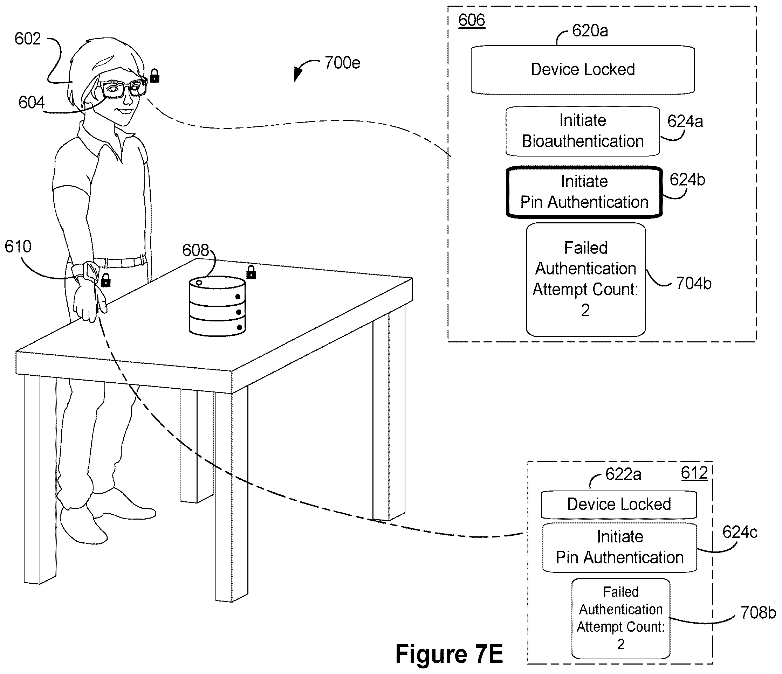

Figure 7E illustrates scene 700e in which the previous five minute progressive delay period has elapsed. The device remains locked, but authentication options are once again presented to the user via the field-of-view 606 and the display 612. In accordance with some embodiments the field-of-view 606 and the display 612 have been updated to no longer display an authentication delay element 702 or 706 respectively, however they still display the authentication count elements 704b and 708b, respectively. They have also been updated to display the same authentication elements as described earlier with respect to Figure 6A. In accordance with some embodiments, the user 602 selects the pin authentication element 624c within the display 612 to initiate a pin authentication at the head-wearable device 604.

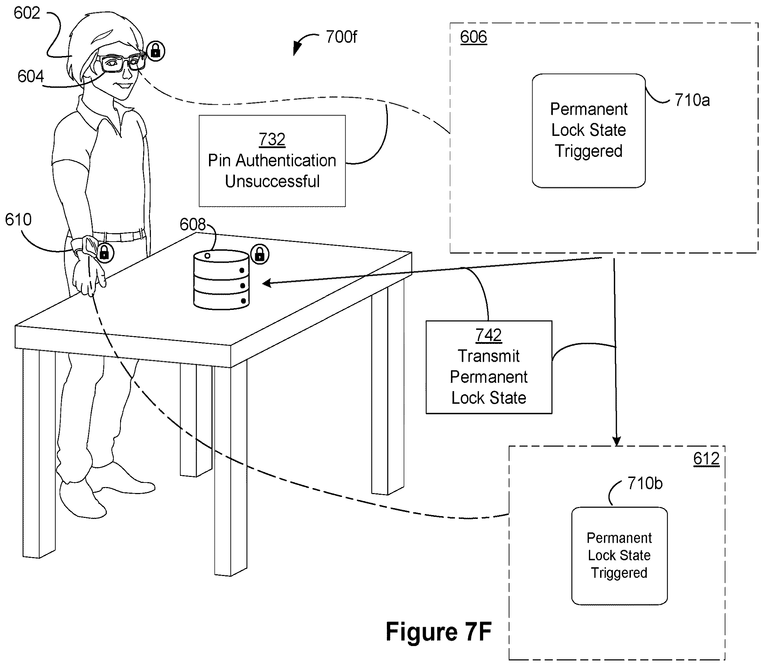

Figure 7F illustrates scene 700f in which the previously initiated pin authentication process at the head-wearable device 604 has been completed unsuccessfully. Based on this unsuccessful pin authentication 732 attempt, the failed authentication count was generated and reached a threshold such that a permanent lock state is triggered. The permanent lock state is transmitted 742 from the head-wearable device 604 to the other devices in the constellation. Based on the transmitted permanent lock state, all devices in the constellation enter a permanent lock state as indicated by the icons next to all the devices within Figure 7F. The display 612 of the wrist-wearable device 610 and the field-of-view 606 of the head-wearable device 604 have been updated to display a permanent lock state notification element 710 (e.g., permanent lock state elements 710a and 710b). In some embodiments, the permanent lock state is an irrecoverable security state requiring factory intervention. The permanent lock state propagates across all constellation devices, prevents any further authentication attempts, and can only be cleared through a factory-authorized reset process. In some embodiments, the permanent lock state is triggered when a shared counter of failed authentication attempts exceeds a predetermined threshold (e.g., within a predefined amount of time). In some embodiments, the permanent lock state causes all devices in the constellation to restrict access to device functions and data until a factory reset is performed, which wipes the device and restores initial settings.

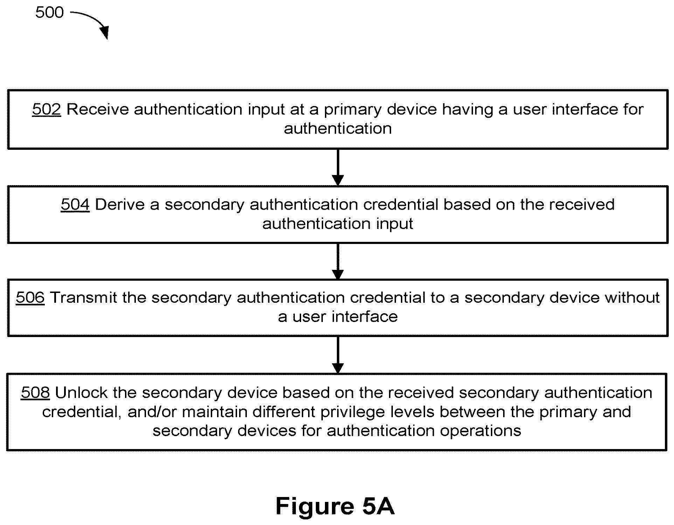

(A1) In accordance with some embodiments, Figure 5A is a flowchart of an example method 500 for managing authentication across multiple devices. The method can be implemented using the system 100, and/or using the techniques described above in reference to Figures 1-4 and 6-7. The method includes receiving (502) authentication input at a primary device (e.g., the AR glasses 104, or the interactive screen display device 106) having a user interface (e.g., the display in the AR glasses, voice interface of the interactive screen display device), deriving (504) a secondary authentication credential based on the received authentication input, transmitting (506) the secondary authentication credential to a secondary device (e.g., the storage unit 108) without a user interface, unlocking the secondary device based on the received secondary authentication credential, and/or maintaining (508) different privilege levels between the primary and secondary devices for authentication operations. For the sake of brevity and explanation, the following description refers to a primary device (e.g., the AR glasses 104) and a secondary device (e.g., the secondary device 108). The primary device may be any type of consumer device with a user interface for authentication, more than one type of device, and/or more than one primary device and/or secondary device.

(A2) In some embodiments of A1, the secondary device locks without receiving a command from the primary device. For example, the secondary device may include a physical button that, when pressed, causes the secondary device to enter a locked state. In some embodiments, the secondary device locks automatically based on a timeout period of inactivity. In some embodiments, the secondary device locks in response to detecting removal from a user's body or a designated location.

(A3) In some embodiments of A2, each device in the system (e.g., the system 100), regardless of privilege level, initiates a lock state for the system, and propagates the lock state to other devices in the system. In some embodiments, only devices with higher privilege levels initiate unlock operations and transmit authentication credentials needed for unlocking. In some embodiments, the secondary device, having a lower privilege level, can initiate system-wide lock operations, but cannot initiate unlock operations or transmit authentication credentials. For example, a storage unit without a user interface may broadcast a lock command to all devices in the constellation when a physical lock button is pressed, but the storage unit does not have the capability to unlock any device in the constellation. In some embodiments, the lock state propagation occurs over a secure communication channel. In some embodiments, the lock state propagation includes a priority indicator that determines how quickly other devices respond to the lock command.

(A4) In some embodiments of any of A1-A3, the primary device verifies device identity before transmitting the secondary authentication credential. For example, the primary device may query the secondary device for a unique identifier and compare the identifier against a list of known devices in the constellation. In some embodiments, the primary device verifies device identity using a challenge-response protocol. In some embodiments, the primary device verifies device identity by confirming that the secondary device possesses a valid certificate signed by a trusted authority.

(A5) In some embodiments of any of A1-A4, the primary device and secondary device are each provisioned with unique cryptographic identifiers at manufacture. In some embodiments, the primary device uses its cryptographic identifier to establish its identity to the secondary device and verifies the cryptographic identity of the secondary device using the secondary device's cryptographic identifier before transmitting the secondary authentication credential. In some embodiments, the secondary device uses its cryptographic identifier to establish its identity to the primary device and verifies the identity of the primary device using the primary device's cryptographic identifier before accepting the secondary authentication credential. For example, the unique cryptographic identifiers may be stored in a secure enclave or trusted platform module within each device. In some embodiments, the cryptographic identifiers are based on asymmetric key pairs where each device stores a private key and shares a corresponding public key with other devices in the constellation. In some embodiments, the cryptographic identifiers are rotated periodically to enhance security.

(A6) In some embodiments of A5, the primary device uses the verified cryptographic identity of the secondary device to determine its predetermined privilege level and establishes a private communication channel with the secondary device based on their respective cryptographic identifiers for transmitting the secondary authentication credential. For example, the primary device may perform a key exchange protocol using the cryptographic identifiers to derive a session key for encrypting communications. In some embodiments, the private communication channel uses end-to-end encryption. In some embodiments, the private communication channel is established using a Diffie-Hellman key exchange or similar cryptographic protocol.

(A7) In some embodiments of A5 or A6, the unique cryptographic identifiers generate shared encryption keys between the primary and secondary devices for securing the transmission of the secondary authentication credential and authenticate each device's identity during each communication session for transmitting the secondary authentication credential. For example, the shared encryption keys may be derived using a key derivation function that takes as input the cryptographic identifiers of both devices and a session-specific nonce. In some embodiments, the shared encryption keys are ephemeral and discarded after each communication session. In some embodiments, the devices use mutual authentication where both the primary device and the secondary device verify each other's identity before proceeding with credential transmission.

(A8) In some embodiments of any of A5-A7, the secondary device compares the verified cryptographic identity of the primary device against a stored list of higher-privileged devices and accepts the secondary authentication credential only when the primary device's identity matches a higher-privileged device in the stored list. For example, the stored list may be provisioned during an initial pairing process and updated when devices are added to or removed from the constellation. In some embodiments, the stored list is synchronized across all devices in the constellation. In some embodiments, the stored list includes privilege level information for each device, enabling the secondary device to determine whether the primary device has sufficient privileges to transmit authentication credentials.

(A9) In some embodiments of any of A1-A8, the method further includes preventing replay attacks in authentication credential transmission between devices. For example, each authentication credential transmission may include a timestamp or sequence number that the receiving device validates against previously received transmissions. In some embodiments, the devices use nonces that are generated for each communication session and verified by the receiving device. In some embodiments, the devices maintain a sliding window of recently received message identifiers and reject any transmission with an identifier that falls within the window.

(A10) In some embodiments of any of A1-A9, the method further includes using a secure communication channel between the primary device and the secondary device, e.g., to prevent man-in-the-middle attacks. For example, the secure communication channel may use transport layer security (TLS) or a similar protocol. In some embodiments, the secure communication channel is established using certificate pinning, where each device stores the expected certificate of other devices in the constellation and rejects connections from devices presenting unexpected certificates. In some embodiments, the secure communication channel uses mutual authentication where both devices verify each other's identity before exchanging data.

(A11) In some embodiments of A10, the primary device establishes a secure communication channel with the secondary device before transmitting the secondary authentication credential and encrypts the secondary authentication credential using a shared key specific to the communication session. In some embodiments, the shared key is derived using a key derivation function that incorporates session-specific parameters such as timestamps, nonces, or device identifiers to ensure uniqueness for each communication session. In some embodiments, the secure communication channel employs TLS or a similar protocol to protect against eavesdropping during credential transmission. In some embodiments, the primary device and secondary device perform a mutual authentication handshake before establishing the secure channel, ensuring both devices verify each other's identity prior to credential exchange. In some embodiments, the encryption algorithm used for the secondary authentication credential includes authenticated encryption with associated data (AEAD) to provide both confidentiality and integrity protection.

(A12) In some embodiments of any of A1-A11, the primary device supports a plurality of authentication methods including biometric and PIN-based authentication. In some embodiments, biometric authentication methods include iris scanning, facial recognition, fingerprint recognition, voice recognition, retinal scanning, or combinations thereof. In some embodiments, the primary device includes one or more sensors configured to capture biometric authentication data, such as image sensors to capture iris data or facial features, or biopotential-signal sensors configured to capture electrocardiography (ECG) data. In some embodiments, the primary device supports fallback authentication methods, such that if biometric authentication fails or is unavailable, the user may authenticate using a PIN or password. In some embodiments, the primary device supports multi-factor authentication requiring successful completion of two or more authentication methods before unlocking. In some embodiments, enterprise policies restrict which authentication methods are available on the primary device, such as disabling biometric authentication entirely or requiring PIN authentication in addition to biometric authentication.

(A13) In some embodiments of A12, the primary device receives a plurality of types of authentication input including biometric and PIN-based input through the user interface and generates a common synthetic password format from any received authentication input type for deriving the secondary authentication credential. In some embodiments, the synthetic password format normalizes different authentication input types into a standardized representation that can be processed uniformly by the authentication backend service. In some embodiments, the synthetic password is generated by applying a cryptographic hash function to the authentication input combined with device-specific salt values. In some embodiments, the synthetic password generation process incorporates entropy from multiple sources to enhance security, such as combining biometric template data with user-entered PIN digits. In some embodiments, the synthetic password format enables the secondary device to validate the credential without requiring knowledge of the original authentication input type used at the primary device.

(A14) In some embodiments of any of A1-A13, the method further includes managing device replacement by enabling pairing of a replacement device, generating new authentication credentials for the replacement device, and maintaining security of user data during replacement. In some embodiments, device replacement is facilitated through a cloud account service that validates the replacement request and coordinates credential transfer between the old device and the replacement device. In some embodiments, the replacement process requires the user to authenticate at an existing primary device before the replacement device can be added to the constellation. In some embodiments, user data stored on the device being replaced remains encrypted and inaccessible until the replacement device successfully completes the pairing process and receives valid credentials. In some embodiments, the system maintains an audit log of device replacement events for security monitoring purposes.

(A15) In some embodiments of any of A1-A14, the method further includes authenticating a replacement device through the primary device using a new user authentication input, deriving a new secondary authentication credential for the replacement device, and maintaining existing privilege levels during the replacement process. In some embodiments, the replacement device inherits the same privilege level as the device it replaces, ensuring continuity of the constellation's privilege hierarchy. In some embodiments, replacing a highest-privilege device requires sharing a private random value through a secure channel, such as through a cloud account associated with the user. In some embodiments, lower-privileged devices in the constellation are automatically reconfigured to recognize the replacement device upon successful completion of the replacement authentication process. In some embodiments, the system implements automatic recovery procedures if the replacement process fails, such as reverting to the previous device configuration or requiring manual intervention.

(A16) In some embodiments of any of A1-A15, the secondary device includes a storage unit containing user data and security controls that restrict access to the user data based on the secondary authentication credential. In some embodiments, the secondary device maintains encryption of the user data while locked and allows access to the user data only after successful validation of the secondary authentication credential. In some embodiments, the storage unit employs hardware-based encryption where encryption keys are stored in a secure enclave or trusted platform module that releases the keys only upon successful credential validation. In some embodiments, the user data includes sensitive information such as health data, financial information, personal communications, or application data that requires protection from unauthorized access. In some embodiments, the secondary device implements data-at-rest encryption using industry-standard algorithms such as AES-256. In some embodiments, the security controls include access control lists that define which applications or services may access specific categories of user data after the device is unlocked.

(A17) In some embodiments of any of A1-A16, the system includes an augmented reality device constellation, the primary device includes augmented reality glasses, and the secondary device includes a storage unit for the augmented reality glasses. In some embodiments, the augmented reality glasses serve as the highest-privilege device in the constellation and are capable of receiving user authentication input through biometric sensors such as iris scanners or through displayed PIN entry interfaces. In some embodiments, the storage unit is a compute puck or processing unit that lacks a user interface but contains computational resources and user data necessary for the augmented reality experience. In some embodiments, the constellation further includes a wrist-wearable device that may serve as an intermediate-privilege device capable of receiving certain types of authentication input. In some embodiments, the augmented reality glasses communicate with the storage unit over a short-range wireless connection such as Bluetooth or a proprietary low-latency protocol optimized for wearable device communication.

(A18) In some embodiments of any of A1-A17, the system includes rate-limiting mechanisms that track failed authentication attempts, implement progressive delays between authentication attempts, and can trigger a permanent lock state requiring factory reset after exceeding a threshold of failed attempts. In some embodiments, the rate-limiting mechanisms maintain a shared counter of failed authentication attempts that is synchronized across all devices in the constellation, such that a failed attempt at any device contributes to the shared counter. In some embodiments, the progressive delays follow an exponential backoff pattern, such as one minute after a first failed attempt, five minutes after a second failed attempt, thirty minutes after a third failed attempt, and four hours after a fourth failed attempt. In some embodiments, the progressive delays follow a linear increase pattern or a custom pattern defined by system configuration or enterprise policy. In some embodiments, the threshold of failed attempts is configurable and may be set to different values based on security requirements, such as five attempts for consumer devices or three attempts for enterprise-managed devices. In some embodiments, a successful authentication attempt at any device within the constellation resets the failed authentication attempt counter and clears any active progressive delay. In some embodiments, the permanent lock state causes all devices in the constellation to restrict access to device functions and data until a factory-authorized reset process is performed, which may involve connecting the device to a manufacturer service, entering a recovery code provided by customer support, or physically transporting the device to an authorized service center.

(A19) In some embodiments of any of A1-A18, the method further includes implementing a privilege-based communication architecture with a communication service that establishes secure communication channels between constellation devices, maintains a privilege level registry of all connected devices, and validates device privileges before routing authentication commands. In some embodiments, each device's privilege level is cryptographically signed during manufacture, verified during each inter-device communication, and used to determine permitted authentication operations. In some embodiments, the privilege level registry is synchronized across all constellation devices, updates automatically when devices join or leave the constellation, and enforces hierarchical authentication flow based on stored privilege levels. In some embodiments, the communication service uses TLS or a similar protocol to establish encrypted channels between devices. In some embodiments, the privilege level registry is stored in a distributed manner across multiple devices in the constellation, with each device maintaining a local copy that is periodically synchronized with other devices. In some embodiments, the privilege levels include at least three tiers: a highest-privilege tier for devices capable of unlocking all other devices, an intermediate-privilege tier for devices that can unlock certain lower-privilege devices but not others, and a lowest-privilege tier for devices that can only initiate lock operations. In some embodiments, the communication service implements message authentication codes or digital signatures to verify the integrity and authenticity of authentication commands before routing them to destination devices. In some embodiments, the privilege level registry includes metadata about each device such as device type, manufacturing date, firmware version, and last successful authentication timestamp.

(A20) In some embodiments of any of A1-A19, the method further includes implementing a unified authentication service with a system-level authentication controller that operates with elevated system account privileges, manages multiple authentication input methods, and coordinates with the authentication backend service. In some embodiments, a synthetic password generator receives authentication inputs from multiple sources, converts varied authentication inputs into standardized synthetic passwords, and securely distributes synthetic passwords to authorized constellation devices. In some embodiments, the authentication backend service validates synthetic passwords against stored credentials, maintains authentication session states, and coordinates with the privilege-based communication architecture to enforce access controls. In some embodiments, the system-level authentication controller runs in a secure execution environment such as a trusted execution environment (TEE) or secure enclave to protect authentication operations from tampering. In some embodiments, the synthetic password generator applies a cryptographic hash function combined with device-specific salt values to generate synthetic passwords that are unique to each device pair in the constellation. In some embodiments, the multiple authentication input methods include PIN entry, iris scanning, facial recognition, fingerprint recognition, voice recognition, and pattern-based authentication. In some embodiments, the authentication backend service maintains session tokens with configurable expiration times, requiring periodic re-authentication based on security policies. In some embodiments, the unified authentication service logs all authentication events including successful authentications, failed attempts, and credential distributions for security auditing purposes.

(A21) In some embodiments of any of A1-A20, the method further includes implementing a unified locking mechanism with a lock state controller that maintains a synchronized lock state across the constellation, processes lock commands from any authenticated device, and manages state propagation to newly connected devices. In some embodiments, each device maintains a local copy of the constellation lock state, a timestamp of its last state synchronization, and a queue of pending state updates. In some embodiments, upon device reconnection, the device compares its local state timestamp with other constellation devices, adopts the most recent valid lock state, and processes any pending state updates in chronological order. In some embodiments, the lock state controller implements conflict resolution rules to handle scenarios where multiple devices have conflicting lock states, such as prioritizing the lock state from the highest-privilege device or adopting the most restrictive state (locked over unlocked) when timestamps are identical. In some embodiments, the queue of pending state updates has a maximum size limit, and older updates are discarded when the queue reaches capacity. In some embodiments, the unified locking mechanism supports partial lock states where certain device functions remain accessible while sensitive data is protected. In some embodiments, the state propagation to newly connected devices includes a verification step where the new device must prove its identity before receiving the current lock state. In some embodiments, the lock state controller broadcasts heartbeat messages at regular intervals to detect device disconnections and trigger appropriate state transitions.

(A22) In some embodiments of any of A1-A21, the method further includes implementing a configurable enterprise security framework with a policy controller that manages enterprise-defined authentication policies, enforces authentication method restrictions, and coordinates multi-factor authentication requirements. The policy controller maintains a registry of allowed authentication methods, backup authentication mechanism configurations, and certificate validation requirements. All authentication attempts are validated against enterprise policies, must satisfy one or more security requirements, and are logged for enterprise security auditing. In some embodiments, the enterprise security framework receives policy updates from a mobile device management (MDM) server or enterprise management console. In some embodiments, the authentication method restrictions include disabling biometric authentication entirely, requiring PIN authentication as a fallback after biometric failures, or mandating specific PIN complexity requirements such as minimum length or prohibition of sequential digits. In some embodiments, the multi-factor authentication requirements specify that users must provide two or more distinct authentication factors, such as a PIN combined with iris scanning, before the constellation unlocks. In some embodiments, the policy controller supports time-based access restrictions that limit authentication to specific hours or days. In some embodiments, the enterprise security framework includes a backup escrow mechanism that allows designated enterprise administrators to unlock devices when users forget their credentials. In some embodiments, the certificate validation requirements include checking certificate revocation lists or using online certificate status protocol (OCSP) to verify that device certificates remain valid.

(A23) In some embodiments of any of A1-A22, the method further includes implementing a secure device replacement mechanism with a transition controller that interfaces with a cloud account service, manages authority transfer procedures, and coordinates credential updates. During primary device replacement, the cloud service validates the replacement request, a secure channel is established between old and new devices, authority is transferred via encrypted private random values, and lower-privileged devices are automatically reconfigured. The constellation maintains security by continuing normal operation during the transition, validating all devices against new credentials, and implementing automatic recovery procedures if the transition fails. In some embodiments, the cloud account service requires multi-factor authentication from the user before approving a device replacement request. In some embodiments, the secure channel between old and new devices is established using a key exchange protocol such as Diffie-Hellman or elliptic curve Diffie-Hellman. In some embodiments, the authority transfer includes a grace period during which both old and new devices can authenticate to the constellation, allowing users to verify that the new device functions correctly before decommissioning the old device. In some embodiments, if the old device is lost or damaged and unavailable for direct communication, the cloud service provides an alternative transfer mechanism using recovery codes or trusted contact verification. In some embodiments, the automatic recovery procedures include reverting to the previous device configuration, notifying the user of the failure, and providing troubleshooting guidance. In some embodiments, the replacement device inherits the same privilege level as the device it replaces, ensuring continuity of the constellation's privilege hierarchy.

(A24) In some embodiments of any of A1-A23, the method further includes implementing a resilient constellation management system with a state management controller that tracks device connection states, manages authentication state synchronization, and coordinates credential lifecycles. During device disconnection, the constellation maintains secure operation, authentication states are preserved, and reconnection procedures are prepared. Upon device reconnection, authentication states are automatically synchronized, pending operations are processed, and obsolete credentials are securely removed. In some embodiments, the state management controller maintains a connection state history for each device, including timestamps of connections, disconnections, and the duration of each session. In some embodiments, the credential lifecycles include automatic rotation of encryption keys at configurable intervals, such as daily, weekly, or upon each authentication session. In some embodiments, the reconnection procedures include a challenge-response protocol to verify that the reconnecting device possesses valid credentials before granting access to constellation resources. In some embodiments, obsolete credentials are securely removed using cryptographic erasure techniques that render the credentials unrecoverable. In some embodiments, the resilient constellation management system supports offline operation for individual devices, allowing them to function with limited capabilities when disconnected from the constellation and automatically restoring full functionality upon reconnection. In some embodiments, the state management controller implements a watchdog timer that triggers automatic lock states if a device remains disconnected beyond a configurable threshold period.

(A25) In some embodiments of any of A1-A24, the method further includes implementing an adaptive security mechanism with a security controller that monitors authentication attempts across the constellation of devices, maintains a shared counter of failed authentication attempts, calculates progressive delay periods between allowed authentication attempts based on the failed attempt counter, and broadcasts security state updates to all constellation devices. Each device in the constellation synchronizes its local failed attempt counter with the security controller, enforces the calculated delay periods before accepting new authentication attempts, and enters a permanent lock state requiring factory reset when the shared counter exceeds a predetermined threshold. The permanent lock state propagates across all constellation devices, prevents any further authentication attempts, and can only be cleared through a factory-authorized reset process. In some embodiments, the security controller distinguishes between different types of failed authentication attempts, such as incorrect PIN entries versus biometric mismatches, and applies different weighting factors to each type when calculating the shared counter. In some embodiments, the adaptive security mechanism includes anomaly detection that identifies suspicious patterns of authentication attempts, such as rapid sequential attempts from different devices or attempts occurring at unusual times, and triggers enhanced security measures in response. In some embodiments, the security state updates include information about the current delay period, the number of remaining attempts before permanent lock, and recommendations for the user such as waiting for the delay period to expire or contacting customer support. In some embodiments, the factory-authorized reset process requires physical access to the device combined with verification through a manufacturer portal, preventing remote attackers from resetting devices. In some embodiments, the adaptive security mechanism allows enterprise administrators to configure custom thresholds and delay schedules that differ from default consumer settings.

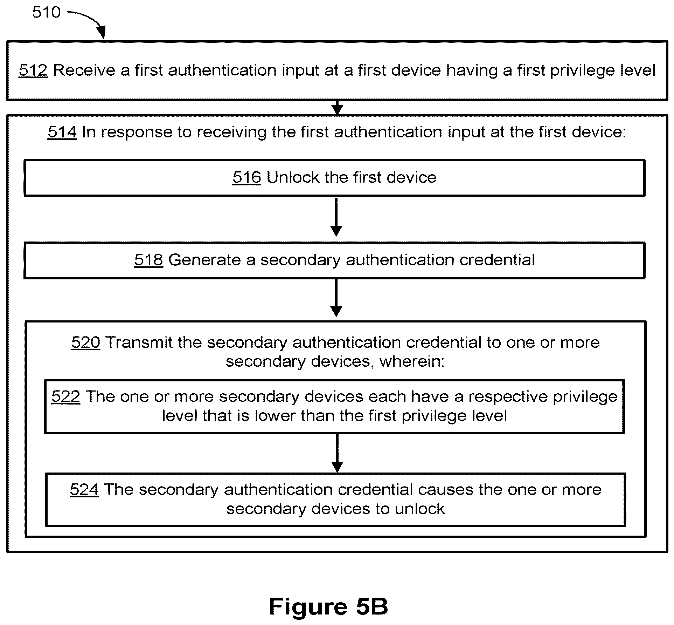

(B1) In accordance with some embodiments, Figure 5B is a flowchart of an example method 500 for managing authentication across multiple devices. The method can be implemented using the system 100, and/or using the techniques described above in reference to Figures 1-4 and 6-7. The method includes receiving (512) a first authentication input at a first device having a first privilege level. In response to receiving the first authentication input at the first device (514): unlocking (516) the first device, generating (518) a secondary authentication credential, and transmitting (520) the secondary authentication credential to one or more secondary devices, where: the secondary devices each have a respective privilege level that is lower than the first privilege level (522), and the secondary authentication credential causes the one or more secondary devices to unlock (524). For the sake of brevity and explanation, the following description refers to a primary device (e.g., the AR glasses 104) and one or more secondary devices (e.g., the secondary device 108). The primary device may be any type of consumer device with a user interface for authentication, more than one type of device, and/or more than one primary device and/or secondary device.

(B2) In some embodiments of B1, the method further includes, based on a determination that another one or more devices have a respective privilege level that is higher than the first privilege level, not transmitting the secondary authentication credential to the other one or more devices. In some embodiments of B1, the method instead further includes transmitting the secondary authentication credential to another one or more secondary devices, where, based on a determination that the other one or more secondary devices each have a respective privilege level that is higher than the first privilege level, the secondary authentication credential does not cause the one or more secondary devices to unlock. For example, a wrist-wearable device with an intermediate privilege level may transmit credentials to a head-wearable device with a higher privilege level, but the head-wearable device may reject the unlock attempt based on the privilege hierarchy. In some embodiments, the higher-privilege device logs the received credential transmission for security auditing purposes without acting upon it. In some embodiments, the higher-privilege device responds with a notification indicating that the unlock attempt was rejected due to insufficient privilege level of the originating device. In some embodiments, the determination of relative privilege levels is performed by querying a synchronized privilege registry maintained across the constellation.

(B3) In some embodiments of B1 or B2, the method further includes, in response to receiving a locking input at the first device: locking the first device, generating a secondary locking output based on the locking input, and transmitting the secondary locking output to the one or more secondary devices, where the secondary locking output causes the one or more secondary devices to lock. In some embodiments, the locking input comprises a physical button press on the first device, a voice command detected by a microphone, a gesture detected by sensors of the first device, or a timeout condition triggered by a period of inactivity. In some embodiments, the secondary locking output includes a timestamp and a device identifier of the originating device to enable other devices in the constellation to verify the authenticity of the lock command. In some embodiments, the secondary locking output is transmitted with a priority indicator that causes receiving devices to immediately enter a locked state without waiting for acknowledgment from other constellation members. In some embodiments, the method further includes transmitting the secondary locking output to devices with higher privilege levels than the first device, and the higher-privilege devices also enter a locked state in response to the secondary locking output regardless of the privilege hierarchy.

(B4) In some embodiments of any of B1-B3, the method further includes receiving a secondary locking output transmitted from a secondary device of the one or more secondary devices, where the secondary locking output is generated based on a locking input received at the secondary device and transmitted to the first device and the other one or more secondary devices; and in response to receiving the secondary locking output from the secondary device, locking the first device. In some embodiments, the secondary device that initiates the lock is a storage unit without a user interface, and the locking input is a physical button press on the storage unit. In some embodiments, the first device verifies the identity of the secondary device before accepting the secondary locking output to prevent unauthorized lock commands from compromised or spoofed devices. In some embodiments, the first device displays a notification to the user indicating which device in the constellation initiated the lock state. In some embodiments, the method includes queuing the lock command if the first device is currently performing a critical operation, and executing the lock command upon completion of the critical operation.

(B5) In some embodiments of any of B1-B4, the one or more secondary devices comprise a plurality of devices. In some embodiments the plurality of devices each have different privilege levels and/or device types. In some embodiments, each of the plurality of devices may or may not have displays and/or another method by which the user may interact with the device for authenticating or locking purposes. For example, the plurality of devices may include a wrist-wearable device with a touchscreen display, a storage unit without any user interface, and a smart textile-based garment with haptic feedback capabilities. In some embodiments, the secondary authentication credential is transmitted sequentially to each of the plurality of devices in order of their privilege levels, starting with the highest-privilege secondary device. In some embodiments, the secondary authentication credential is transmitted simultaneously to all secondary devices using a broadcast mechanism. In some embodiments, different secondary authentication credentials are derived for different secondary devices based on their respective device types or security requirements.

(B6) In some embodiments of any of B1-B5, at least one of the secondary devices includes a user interface. In some embodiments, the user interface of the secondary device is a touchscreen display capable of receiving PIN input or displaying authentication status information. In some embodiments, the user interface of the secondary device is limited to status indicators such as LEDs that display lock state without accepting authentication input. In some embodiments, the secondary device with a user interface is configured to display a confirmation prompt when receiving the secondary authentication credential, allowing the user to approve or reject the unlock operation. In some embodiments, the secondary device with a user interface can accept direct authentication input as an alternative to receiving the secondary authentication credential from the first device, but the direct authentication input does not propagate unlock operations to other devices in the constellation due to the secondary device's lower privilege level.

(B7) In some embodiments of any of B1-B6, a device type of at least one of the one or more secondary devices is the same as a device type of the first device. For example, the constellation may include two head-wearable devices where one is designated as the primary device with a higher privilege level and the other is designated as a secondary device with a lower privilege level. In some embodiments, devices of the same type are assigned different privilege levels based on user configuration during initial setup. In some embodiments, devices of the same type are assigned different privilege levels based on the order in which they were added to the constellation. In some embodiments, a user may designate a backup primary device of the same device type that can assume higher privilege level responsibilities if the original primary device becomes unavailable or is replaced.

(B8) In some embodiments of any of B1-B7, the method further includes, before transmitting the authentication credential, verifying, by the first device, a device identity of the one or more secondary devices. In some embodiments, verifying the device identity includes exchanging cryptographic challenges and responses using factory-provisioned cryptographic identifiers. In some embodiments, verifying the device identity includes checking that the secondary device's cryptographic identifier appears in a list of authorized devices stored on the first device. In some embodiments, verifying the device identity includes confirming that the secondary device's certificate has not been revoked by querying a certificate revocation service. In some embodiments, the verification process includes establishing a fresh session key for encrypting the subsequent credential transmission. In some embodiments, if device identity verification fails, the first device logs the failed verification attempt and does not transmit the secondary authentication credential.

(B9) In some embodiments of any of B1-B8, the method further includes provisioning the first device and the one or more secondary devices with unique cryptographic identifiers and where verifying the device identify of the one or more secondary devices comprises: establishing, using a first device cryptographic identifier, an identity of the first device to the one or more secondary devices, and verifying, using respective cryptographic identifiers for the one or more secondary devices, identities of the one or more secondary devices.

(B10) In some embodiments of any of B1-B9, the method further includes determining a respective privilege level for each of the one or more secondary devices. In some embodiments, determining a respective privilege level comprises In some embodiments, determining a respective privilege level comprises querying a privilege level registry that stores the privilege level associated with each device in the constellation. In some embodiments, determining a respective privilege level comprises receiving the privilege level from the device during an initial pairing or registration process. In some embodiments, determining a respective privilege level comprises inferring the privilege level based on a device type of the device. For example, head-wearable devices and interactive screen display devices may be assigned to high privilege levels by default, while storage units without user interfaces may be assigned low privilege levels by default. In some embodiments, determining a respective privilege level comprises retrieving the privilege level from a cloud account service associated with the user.

In some embodiments, the privilege level of a device is set by the user during an initial setup or configuration process. For example, the user may designate which devices within the constellation are authorized to initiate unlock operations and which devices are restricted to lock operations only. In some embodiments, the user may modify the privilege levels of devices within the constellation through a settings interface on a primary device or through a cloud-based account management portal. In some embodiments, the privilege level of a device is determined based on whether the device includes a user interface capable of receiving authentication input. Devices with user interfaces capable of receiving authentication input (e.g., PIN entry, biometric capture) may be assigned higher privilege levels than devices without such user interfaces.

In some embodiments, the privilege level of a device is determined based on the device's hardware capabilities. For example, devices equipped with secure enclaves, trusted platform modules, or other hardware security features may be assigned higher privilege levels than devices lacking such features. In some embodiments, the privilege level of a device is determined based on enterprise policies configured by an administrator. For example, an enterprise policy may specify that only certain device types or devices meeting certain security requirements are permitted to have high privilege levels. In some embodiments, the privilege level of a device is fixed at manufacture and cannot be modified. In some embodiments, the privilege level of a device is dynamic and may change based on context, such as the user's location, the time of day, or the presence of other devices within the constellation.

(B11) In some embodiments of any of B1-B10, the method further includes establishing a private communication channel with the one or more secondary devices for transmitting the secondary authentication credential.

(B12) In some embodiments of any of B1-B11, the first device is configured to support a plurality of authentication methods for receiving a first authentication input, the plurality of authentication methods comprising at least one biometric authentication method and at least one knowledge-based authentication method. In some embodiments, knowledge-based authentication methods comprise a PIN or password authentication method, where the user inputs a preset series of numbers and/or characters. In some embodiments, user's may input these numbers and/or characters via eye-tracking input, haptic input, interacting with a visual display, and/or audio input. In some embodiments, biometric authentication methods may comprise iris scanning, facial recognition, fingerprint recognition, voice recognition, retinal scanning, and/or any other biometric data that can be captured by sensors of the primary device. In some embodiments, the head-wearable device includes one or more sensors configured to capture biometric authentication data, such as image sensors to capture iris data, gaze data, or facial features. In some embodiments, the wrist-wearable device includes biopotential-signal sensors configured to capture biometric data, such as electrocardiography (ECG or EKG) sensors configured to measure electrical activity of the heart, or electromyography (EMG) sensors configured to measure the electrical activity of muscles. In some embodiments, biometric authentication is performed using data from multiple sensors and/or multiple devices within the constellation to improve authentication accuracy and security.

(C1) In accordance with some embodiments, a method comprising, at a device, receiving secondary authentication credentials from a first device, where the device has a privilege level lower that is lower than a privilege level of the first device, in response to receiving the secondary authentication credentials, unlocking the device. In some embodiments, the first device is not unlocked. In some embodiments, the device is unlocked without sending a signal to unlock any other devices with higher privilege levels than the first device. In some embodiments the device unlocks in response to receiving the secondary authentication credentials and in accordance with a determination that the first device has a higher privilege level. In some embodiments, the method further comprises initiating unlock operations and transmitting authentication credentials needed for unlocking to other devices, based on a determination that the privilege level of the initiating device is a high level, and initiating system-wide lock operations, regardless of the privilege level of the initiating device. In accordance with some embodiments, the method further includes not initiating unlock operations and/or transmitting authentication credentials based on determination that the privilege level of the initiating device is a low level.

(C2) In some embodiments of C1, the method further includes receiving an authentication input at the device, in response to receiving the authentication input, unlocking the device, based on a determination that one or more other devices have a respective privilege level that is higher than the privilege level of the device, and not transmitting the secondary authentication credential to the one or more other devices. For example, a wrist-wearable device may receive a PIN input and unlock itself, but upon determining that a head-wearable device in the constellation has a higher privilege level, the wrist-wearable device refrains from transmitting any credentials to the head-wearable device. In some embodiments, the device logs the authentication event and the determination that higher-privilege devices exist, enabling security auditing without triggering unauthorized unlock attempts. In some embodiments, the device displays a notification to the user indicating that the device has been unlocked but that other devices in the constellation remain locked due to privilege hierarchy restrictions. In some embodiments, the determination of relative privilege levels is performed by querying a locally cached privilege registry that was synchronized during initial constellation pairing.

(C3) In some embodiments of C1 or C2, the method further includes transmitting the secondary authentication credential to another device with the same privilege level, and causing the other device to unlock, based on the received secondary authentication credential. For example, if a constellation includes two storage units that both have the same low privilege level, successful authentication at one storage unit may cause transmission of credentials to the other storage unit, enabling both to unlock simultaneously. In some embodiments, devices at the same privilege level form a peer group where authentication at any member of the peer group propagates to all other members of that group. In some embodiments, the transmission of credentials between same-privilege devices requires mutual verification of device identities using factory-provisioned cryptographic identifiers before the receiving device accepts the credentials. In some embodiments, an enterprise policy may restrict or disable credential propagation between same-privilege devices, requiring each device to receive credentials only from a higher-privilege device.

(C4) In some embodiments of any of C1-C3, the method further includes receiving a locking input at the device and in response to receiving the locking input, locking the device without receiving a command from the first device. For example, a storage unit may include a physical button that, when pressed by the user, causes the storage unit to enter a locked state independently of any instruction from a head-wearable device or other higher-privilege device. In some embodiments, the locking input comprises a timeout condition triggered by a period of inactivity, causing the device to automatically lock after a configurable duration without user interaction. In some embodiments, the locking input comprises detection of device removal, such as a storage unit detecting that it has been disconnected from a belt clip or holster. In some embodiments, upon locking in response to the locking input, the device broadcasts a lock notification to other devices in the constellation, enabling system-wide lock propagation regardless of the initiating device's privilege level. In some embodiments, the device queues the lock notification for transmission if other constellation devices are temporarily out of communication range.

(C5) In some embodiments of any of C1-C4, the method further includes verifying a device identity of the first device before unlocking in response to the secondary authentication credentials. In some embodiments, verifying the device identity comprises exchanging cryptographic challenges and responses using factory-provisioned cryptographic identifiers stored in secure hardware enclaves on each device. In some embodiments, verifying the device identity comprises confirming that the first device's cryptographic identifier appears in a whitelist of authorized devices that was established during initial constellation pairing. In some embodiments, verifying the device identity comprises validating a digital certificate chain associated with the first device to confirm that the certificate has not been revoked and was issued by a trusted certificate authority. In some embodiments, if device identity verification fails, the device rejects the secondary authentication credentials, logs the failed verification attempt for security auditing, and optionally increments a shared failed attempt counter that contributes to rate-limiting mechanisms across the constellation. In some embodiments, the device identity verification process establishes a fresh session key that is used to decrypt the secondary authentication credentials, ensuring that credentials intercepted from previous sessions cannot be replayed.

As can be appreciated by one of ordinary skill in the art, the methods and techniques described herein (e.g., A1-A25, B1-12, and C1-C5) can be combined with one another and/or rearranged in various configurations. In accordance with some embodiments, a method of operating a computing system includes operations that correspond to any of the methods and techniques described herein (e.g., A1-A25, B1-12, and C1-C5).

In accordance with some embodiments, a computing system is configured to perform operations corresponding to any of the methods described herein (e.g., A1-A25, B1-12, and C1-C5). The computing system may include any of the devices described herein, including but not limited to one or more wrist-wearable devices, a pair of augmented-reality glasses, an MR headset, an HIPD, a smart textile-based garment, and/or other electronic devices described herein.

In accordance with some embodiments, a non-transitory computer-readable storage medium stores instructions that, when executed by a computing system, cause the computing system to perform operations corresponding to any of the methods and techniques described herein (e.g., A1-A25, B1-12, and C1-C5). The computing system may include or be in communication with any of the devices described herein, such as any of the devices described in the following sections.

### Example Extended-Reality Systems

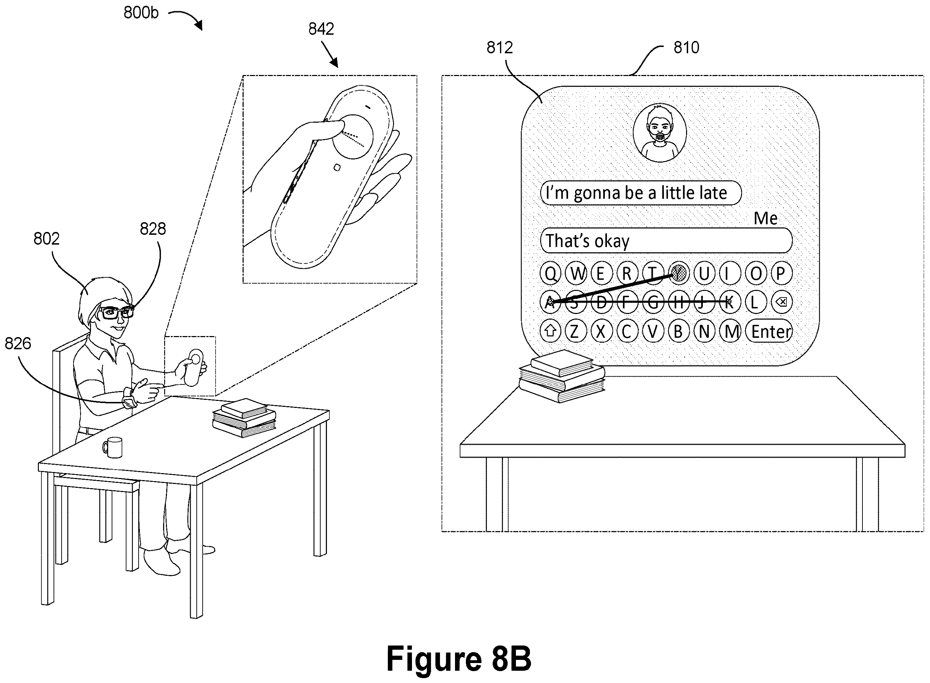

Figures 8A 8B, 8C-1, and 8C-2, illustrate example XR systems that include AR and MR systems, in accordance with some embodiments. Figure 8A shows an XR system 800a and first example user interactions using a wrist-wearable device 826, a head-wearable device (e.g., AR device 828), and/or a HIPD 842. Figure 8B shows a second XR system 800b and second example user interactions using a wrist-wearable device 826, AR device 828, and/or an HIPD 842. Figures 8C-1 and 8C-2 show a third MR system 800c and third example user interactions using a wrist-wearable device 826, a head-wearable device (e.g., an MR device such as a VR device), and/or an HIPD 842. As the skilled artisan will appreciate upon reading the descriptions provided herein, the above-example AR and MR systems (described in detail below) can perform various functions and/or operations.

The wrist-wearable device 826, the head-wearable devices, and/or the HIPD 842 can communicatively couple via a network 825 (e.g., cellular, near field, Wi-Fi, personal area network, wireless LAN). Additionally, the wrist-wearable device 826, the head-wearable device, and/or the HIPD 842 can also communicatively couple with one or more servers 830, computers 840 (e.g., laptops, computers), mobile devices 850 (e.g., smartphones, tablets), and/or other electronic devices via the network 825 (e.g., cellular, near field, Wi-Fi, personal area network, wireless LAN). Similarly, a smart textile-based garment, when used, can also communicatively couple with the wrist-wearable device 826, the head-wearable device(s), the HIPD 842, the one or more servers 830, the computers 840, the mobile devices 850, and/or other electronic devices via the network 825 to provide inputs.

Turning to Figure 8A, a user 802 is shown wearing the wrist-wearable device 826 and the AR device 828 and having the HIPD 842 on their desk. The wrist-wearable device 826, the AR device 828, and the HIPD 842 facilitate user interaction with an AR environment. In particular, as shown by the AR system 800a, the wrist-wearable device 826, the AR device 828, and/or the HIPD 842 cause presentation of one or more avatars 804, digital representations of contacts 806, and virtual objects 808. As discussed below, the user 802 can interact with the one or more avatars 804, digital representations of the contacts 806, and virtual objects 808 via the wrist-wearable device 826, the AR device 828, and/or the HIPD 842. In addition, the user 802 is also able to directly view physical objects in the environment, such as a table 829, through transparent lens(es) and waveguide(s) of the AR device 828. Alternatively, an MR device could be used in place of the AR device 828 and a similar user experience can take place, but the user would not be directly viewing physical objects in the environment, such as table 829, and would instead be presented with a virtual reconstruction of the table 829 produced from one or more sensors of the MR device (e.g., an outward facing camera capable of recording the surrounding environment).

The user 802 can use any of the wrist-wearable device 826, the AR device 828 (e.g., through physical inputs at the AR device and/or built-in motion tracking of a user's extremities), a smart-textile garment, externally mounted extremity tracking device, the HIPD 842 to provide user inputs, etc. For example, the user 802 can perform one or more hand gestures that are detected by the wrist-wearable device 826 (e.g., using one or more EMG sensors and/or IMUs built into the wrist-wearable device) and/or AR device 828 (e.g., using one or more image sensors or cameras) to provide a user input. Alternatively, or additionally, the user 802 can provide a user input via one or more touch surfaces of the wrist-wearable device 826, the AR device 828, and/or the HIPD 842, and/or voice commands captured by a microphone of the wrist-wearable device 826, the AR device 828, and/or the HIPD 842. The wrist-wearable device 826, the AR device 828, and/or the HIPD 842 include an artificially intelligent digital assistant to help the user in providing a user input (e.g., completing a sequence of operations, suggesting different operations or commands, providing reminders, confirming a command). For example, the digital assistant can be invoked through an input occurring at the AR device 828 (e.g., via an input at a temple arm of the AR device 828). In some embodiments, the user 802 can provide a user input via one or more facial gestures and/or facial expressions. For example, cameras of the wrist-wearable device 826, the AR device 828, and/or the HIPD 842 can track the user 802's eyes for navigating a user interface.

The wrist-wearable device 826, the AR device 828, and/or the HIPD 842 can operate alone or in conjunction to allow the user 802 to interact with the AR environment. In some embodiments, the HIPD 842 is configured to operate as a central hub or control center for the wrist-wearable device 826, the AR device 828, and/or another communicatively coupled device. For example, the user 802 can provide an input to interact with the AR environment at any of the wrist-wearable device 826, the AR device 828, and/or the HIPD 842, and the HIPD 842 can identify one or more back-end and front-end tasks to cause the performance of the requested interaction and distribute instructions to cause the performance of the one or more back-end and front-end tasks at the wrist-wearable device 826, the AR device 828, and/or the HIPD 842. In some embodiments, a back-end task is a background-processing task that is not perceptible by the user (e.g., rendering content, decompression, compression, application-specific operations), and a front-end task is a user-facing task that is perceptible to the user (e.g., presenting information to the user, providing feedback to the user). The HIPD 842 can perform the back-end tasks and provide the wrist-wearable device 826 and/or the AR device 828 operational data corresponding to the performed back-end tasks such that the wrist-wearable device 826 and/or the AR device 828 can perform the front-end tasks. In this way, the HIPD 842, which has more computational resources and greater thermal headroom than the wrist-wearable device 826 and/or the AR device 828, performs computationally intensive tasks and reduces the computer resource utilization and/or power usage of the wrist-wearable device 826 and/or the AR device 828.

In the example shown by the AR system 800a, the HIPD 842 identifies one or more back-end tasks and front-end tasks associated with a user request to initiate an AR video call with one or more other users (represented by the avatar 804 and the digital representation of the contact 806) and distributes instructions to cause the performance of the one or more back-end tasks and front-end tasks. In particular, the HIPD 842 performs back-end tasks for processing and/or rendering image data (and other data) associated with the AR video call and provides operational data associated with the performed back-end tasks to the AR device 828 such that the AR device 828 performs front-end tasks for presenting the AR video call (e.g., presenting the avatar 804 and the digital representation of the contact 806).

In some embodiments, the HIPD 842 can operate as a focal or anchor point for causing the presentation of information. This allows the user 802 to be generally aware of where information is presented. For example, as shown in the AR system 800a, the avatar 804 and the digital representation of the contact 806 are presented above the HIPD 842. In particular, the HIPD 842 and the AR device 828 operate in conjunction to determine a location for presenting the avatar 804 and the digital representation of the contact 806. In some embodiments, information can be presented within a predetermined distance from the HIPD 842 (e.g., within five meters). For example, as shown in the AR system 800a, virtual object 808 is presented on the desk some distance from the HIPD 842. Similar to the above example, the HIPD 842 and the AR device 828 can operate in conjunction to determine a location for presenting the virtual object 808. Alternatively, in some embodiments, presentation of information is not bound by the HIPD 842. More specifically, the avatar 804, the digital representation of the contact 806, and the virtual object 808 do not have to be presented within a predetermined distance of the HIPD 842. While an AR device 828 is described working with an HIPD, an MR headset can be interacted with in the same way as the AR device 828.

User inputs provided at the wrist-wearable device 826, the AR device 828, and/or the HIPD 842 are coordinated such that the user can use any device to initiate, continue, and/or complete an operation. For example, the user 802 can provide a user input to the AR device 828 to cause the AR device 828 to present the virtual object 808 and, while the virtual object 808 is presented by the AR device 828, the user 802 can provide one or more hand gestures via the wrist-wearable device 826 to interact and/or manipulate the virtual object 808. While an AR device 828 is described working with a wrist-wearable device 826, an MR headset can be interacted with in the same way as the AR device 828.

### Integration of Artificial Intelligence with XR Systems

Figure 8A illustrates an interaction in which an artificially intelligent virtual assistant can assist in requests made by a user 802. The AI virtual assistant can be used to complete open-ended requests made through natural language inputs by a user 802. For example, in Figure 8A the user 802 makes an audible request 844 to summarize the conversation and then share the summarized conversation with others in the meeting. In addition, the AI virtual assistant is configured to use sensors of the XR system (e.g., cameras of an XR headset, microphones, and various other sensors of any of the devices in the system) to provide contextual prompts to the user for initiating tasks.

Figure 8A also illustrates an example neural network 852 used in Artificial Intelligence applications. Uses of Artificial Intelligence (AI) are varied and encompass many different aspects of the devices and systems described herein. AI capabilities cover a diverse range of applications and deepen interactions between the user 802 and user devices (e.g., the AR device 828, an MR device 832, the HIPD 842, the wrist-wearable device 826). The AI discussed herein can be derived using many different training techniques. While the primary AI model example discussed herein is a neural network, other AI models can be used. Nonlimiting examples of AI models include artificial neural networks (ANNs), deep neural networks (DNNs), convolution neural networks (CNNs), recurrent neural networks (RNNs), large language models (LLMs), long short-term memory networks, transformer models, decision trees, random forests, support vector machines, k-nearest neighbors, genetic algorithms, Markov models, Bayesian networks, fuzzy logic systems, and deep reinforcement learnings, etc. The AI models can be implemented at one or more of the user devices, and/or any other devices described herein. For devices and systems herein that employ multiple AI models, different models can be used depending on the task. For example, for a natural-language artificially intelligent virtual assistant, an LLM can be used and for the object detection of a physical environment, a DNN can be used instead.

In another example, an Al virtual assistant can include many different Al models and based on the user's request, multiple Al models may be employed (concurrently, sequentially or a combination thereof). For example, an LLM-based Al model can provide instructions for helping a user follow a recipe and the instructions can be based in part on another Al model that is derived from an ANN, a DNN, an RNN, etc. that is capable of discerning what part of the recipe the user is on (e.g., object and scene detection).

As Al training models evolve, the operations and experiences described herein could potentially be performed with different models other than those listed above, and a person skilled in the art would understand that the list above is non-limiting.

A user 802 can interact with an Al model through natural language inputs captured by a voice sensor, text inputs, or any other input modality that accepts natural language and/or a corresponding voice sensor module. In another instance, input is provided by tracking the eye gaze of a user 802 via a gaze tracker module. Additionally, the Al model can also receive inputs beyond those supplied by a user 802. For example, the Al can generate its response further based on environmental inputs (e.g., temperature data, image data, video data, ambient light data, audio data, GPS location data, inertial measurement (i.e., user motion) data, pattern recognition data, magnetometer data, depth data, pressure data, force data, neuromuscular data, heart rate data, temperature data, sleep data) captured in response to a user request by various types of sensors and/or their corresponding sensor modules. The sensors' data can be retrieved entirely from a single device (e.g., AR device 828) or from multiple devices that are in communication with each other (e.g., a system that includes at least two of an AR device 828, an MR device 832, the HIPD 842, the wrist-wearable device 826, etc.). The Al model can also access additional information (e.g., one or more servers 830, the computers 840, the mobile devices 850, and/or other electronic devices) via a network 825.

A non-limiting list of Al-enhanced functions includes but is not limited to image recognition, speech recognition (e.g., automatic speech recognition), text recognition (e.g., scene text recognition), pattern recognition, natural language processing and understanding, classification, regression, clustering, anomaly detection, sequence generation, content generation, and optimization. In some embodiments, Al-enhanced functions are fully or partially executed on cloud-computing platforms communicatively coupled to the user devices (e.g., the AR device 828, an MR device 832, the HIPD 842, the wrist-wearable device 826) via the one or more networks. The cloud-computing platforms provide scalable computing resources, distributed computing, managed Al services, interference acceleration, pre-trained models, APIs and/or other resources to support comprehensive computations required by the Al-enhanced function.

Example outputs stemming from the use of an Al model can include natural language responses, mathematical calculations, charts displaying information, audio, images, videos, texts, summaries of meetings, predictive operations based on environmental factors, classifications, pattern recognitions, recommendations, assessments, or other operations. In some embodiments, the generated outputs are stored on local memories of the user devices (e.g., the AR device 828, an MR device 832, the HIPD 842, the wrist-wearable device 826), storage options of the external devices (servers, computers, mobile devices, etc.), and/or storage options of the cloud-computing platforms.

The Al-based outputs can be presented across different modalities (e.g., audio-based, visual-based, haptic-based, and any combination thereof) and across different devices of the XR system described herein. Some visual-based outputs can include the displaying of information on XR augments of an XR headset, user interfaces displayed at a wrist-wearable device, laptop device, mobile device, etc. On devices with or without displays (e.g., HIPD 842), haptic feedback can provide information to the user 802. An Al model can also use the inputs described above to determine the appropriate modality and device(s) to present content to the user (e.g., a user walking on a busy road can be presented with an audio output instead of a visual output to avoid distracting the user 802).

### Example Augmented Reality Interaction

Figure 8B shows the user 802 wearing the wrist-wearable device 826 and the AR device 828 and holding the HIPD 842. In the second AR system 800b, the wrist-wearable device 826, the AR device 828, and/or the HIPD 842 are used to receive and/or provide one or more messages to a contact of the user 802. In particular, the wrist-wearable device 826, the AR device 828, and/or the HIPD 842 detect and coordinate one or more user inputs to initiate a messaging application and prepare a response to a received message via the messaging application.

In some embodiments, the user 802 initiates, via a user input, an application on the wrist-wearable device 826, the AR device 828, and/or the HIPD 842 that causes the application to initiate on at least one device. For example, in the second AR system 800b the user 802 performs a hand gesture associated with a command for initiating a messaging application (represented by messaging user interface 812); the wrist-wearable device 826 detects the hand gesture; and, based on a determination that the user 802 is wearing the AR device 828, causes the AR device 828 to present a messaging user interface 812 of the messaging application. The AR device 828 can present the messaging user interface 812 to the user 802 via its display (e.g., as shown by user 802's field of view 810). In some embodiments, the application is initiated and can be run on the device (e.g., the wrist-wearable device 826, the AR device 828, and/or the HIPD 842) that detects the user input to initiate the application, and the device provides another device operational data to cause the presentation of the messaging application. For example, the wrist-wearable device 826 can detect the user input to initiate a messaging application, initiate and run the messaging application, and provide operational data to the AR device 828 and/or the HIPD 842 to cause presentation of the messaging application. Alternatively, the application can be initiated and run at a device other than the device that detected the user input. For example, the wrist-wearable device 826 can detect the hand gesture associated with initiating the messaging application and cause the HIPD 842 to run the messaging application and coordinate the presentation of the messaging application.

Further, the user 802 can provide a user input provided at the wrist-wearable device 826, the AR device 828, and/or the HIPD 842 to continue and/or complete an operation initiated at another device. For example, after initiating the messaging application via the wrist-wearable device 826 and while the AR device 828 presents the messaging user interface 812, the user 802 can provide an input at the HIPD 842 to prepare a response (e.g., shown by the swipe gesture performed on the HIPD 842). The user 802's gestures performed on the HIPD 842 can be provided and/or displayed on another device. For example, the user 802's swipe gestures performed on the HIPD 842 are displayed on a virtual keyboard of the messaging user interface 812 displayed by the AR device 828.

In some embodiments, the wrist-wearable device 826, the AR device 828, the HIPD 842, and/or other communicatively coupled devices can present one or more notifications to the user 802. The notification can be an indication of a new message, an incoming call, an application update, a status update, etc. The user 802 can select the notification via the wrist-wearable device 826, the AR device 828, or the HIPD 842 and cause presentation of an application or operation associated with the notification on at least one device. For example, the user 802 can receive a notification that a message was received at the wrist-wearable device 826, the AR device 828, the HIPD 842, and/or other communicatively coupled device and provide a user input at the wrist-wearable device 826, the AR device 828, and/or the HIPD 842 to review the notification, and the device detecting the user input can cause an application associated with the notification to be initiated and/or presented at the wrist-wearable device 826, the AR device 828, and/or the HIPD 842.

While the above example describes coordinated inputs used to interact with a messaging application, the skilled artisan will appreciate upon reading the descriptions that user inputs can be coordinated to interact with any number of applications including, but not limited to, gaming applications, social media applications, camera applications, web-based applications, financial applications, etc. For example, the AR device 828 can present to the user 802 game application data and the HIPD 842 can use a controller to provide inputs to the game. Similarly, the user 802 can use the wrist-wearable device 826 to initiate a camera of the AR device 828, and the user can use the wrist-wearable device 826, the AR device 828, and/or the HIPD 842 to manipulate the image capture (e.g., zoom in or out, apply filters) and capture image data.

While an AR device 828 is shown being capable of certain functions, it is understood that an AR device can be an AR device with varying functionalities based on costs and market demands. For example, an AR device may include a single output modality such as an audio output modality. In another example, the AR device may include a low-fidelity display as one of the output modalities, where simple information (e.g., text and/or low-fidelity images/video) is capable of being presented to the user. In yet another example, the AR device can be configured with face-facing light emitting diodes (LEDs) configured to provide a user with information, e.g., an LED around the right-side lens can illuminate to notify the wearer to turn right while directions are being provided or an LED on the left-side can illuminate to notify the wearer to turn left while directions are being provided. In another embodiment, the AR device can include an outward-facing projector such that information (e.g., text information, media) may be displayed on the palm of a user's hand or other suitable surface (e.g., a table, whiteboard). In yet another embodiment, information may also be provided by locally dimming portions of a lens to emphasize portions of the environment in which the user's attention should be directed. Some AR devices can present AR augments either monocularly or binocularly (e.g., an AR augment can be presented at only a single display associated with a single lens as opposed presenting an AR augmented at both lenses to produce a binocular image). In some instances an AR device capable of presenting AR augments binocularly can optionally display AR augments monocularly as well (e.g., for power-saving purposes or other presentation considerations). These examples are non-exhaustive and features of one AR device described above can be combined with features of another AR device described above. While features and experiences of an AR device have been described generally in the preceding sections, it is understood that the described functionalities and experiences can be applied in a similar manner to an MR headset, which is described below in the proceeding sections.

### Example Mixed Reality Interaction

Turning to Figures 8C-1 and 8C-2, the user 802 is shown wearing the wrist-wearable device 826 and an MR device 832 (e.g., a device capable of providing either an entirely VR experience or an MR experience that displays object(s) from a physical environment at a display of the device) and holding the HIPD 842. In the third AR system 800c, the wrist-wearable device 826, the MR device 832, and/or the HIPD 842 are used to interact within an MR environment, such as a VR game or other MR/VR application. While the MR device 832 presents a representation of a VR game (e.g., MR game environment 820) to the user 802, the wrist-wearable device 826, the MR device 832, and/or the HIPD 842 detect and coordinate one or more user inputs to allow the user 802 to interact with the VR game.

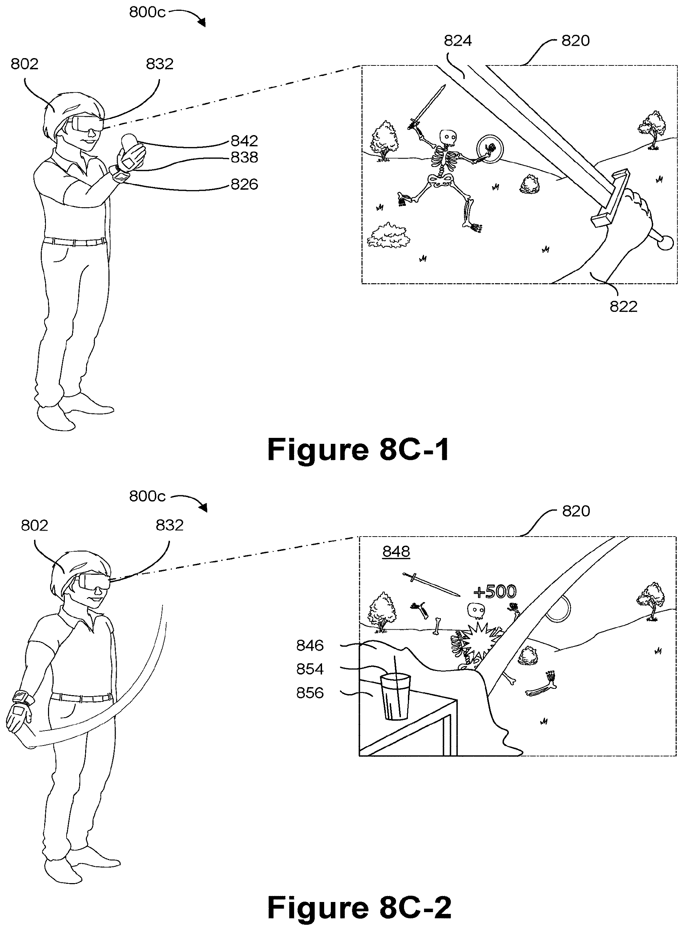

In some embodiments, the user 802 can provide a user input via the wrist-wearable device 826, the MR device 832, and/or the HIPD 842 that causes an action in a corresponding MR environment. For example, the user 802 in the third MR system 800c (shown in Figure 8C- 1) raises the HIPD 842 to prepare for a swing in the MR game environment 820. The MR device 832, responsive to the user 802 raising the HIPD 842, causes the MR representation of the user 822 to perform a similar action (e.g., raise a virtual object, such as a virtual sword 824). In some embodiments, each device uses respective sensor data and/or image data to detect the user input and provide an accurate representation of the user 802's motion. For example, image sensors (e.g., SLAM cameras or other cameras) of the HIPD 842 can be used to detect a position of the HIPD 842 relative to the user 802's body such that the virtual object can be positioned appropriately within the MR game environment 820; sensor data from the wrist-wearable device 826 can be used to detect a velocity at which the user 802 raises the HIPD 842 such that the MR representation of the user 822 and the virtual sword 824 are synchronized with the user 802's movements; and image sensors of the MR device 832 can be used to represent the user 802's body, boundary conditions, or real-world objects within the MR game environment 820.

In Figure 8C-2, the user 802 performs a downward swing while holding the HIPD 842. The user 802's downward swing is detected by the wrist-wearable device 826, the MR device 832, and/or the HIPD 842 and a corresponding action is performed in the MR game environment 820. In some embodiments, the data captured by each device is used to improve the user's experience within the MR environment. For example, sensor data of the wrist-wearable device 826 can be used to determine a speed and/or force at which the downward swing is performed and image sensors of the HIPD 842 and/or the MR device 832 can be used to determine a location of the swing and how it should be represented in the MR game environment 820, which, in turn, can be used as inputs for the MR environment (e.g., game mechanics, which can use detected speed, force, locations, and/or aspects of the user 802's actions to classify a user's inputs (e.g., user performs a light strike, hard strike, critical strike, glancing strike, miss) or calculate an output (e.g., amount of damage)).

Figure 8C-2 further illustrates that a portion of the physical environment is reconstructed and displayed at a display of the MR device 832 while the MR game environment 820 is being displayed. In this instance, a reconstruction of the physical environment 846 is displayed in place of a portion of the MR game environment 820 when object(s) in the physical environment are potentially in the path of the user (e.g., a collision with the user and an object in the physical environment are likely). Thus, this example MR game environment 820 includes (i) an immersive VR portion 848 (e.g., an environment that does not have a corollary counterpart in a nearby physical environment) and (ii) a reconstruction of the physical environment 846 (e.g., table 856 and cup 854). While the example shown here is an MR environment that shows a reconstruction of the physical environment to avoid collisions, other uses of reconstructions of the physical environment can be used, such as defining features of the virtual environment based on the surrounding physical environment (e.g., a virtual column can be placed based on an object in the surrounding physical environment (e.g., a tree)).

While the wrist-wearable device 826, the MR device 832, and/or the HIPD 842 are described as detecting user inputs, in some embodiments, user inputs are detected at a single device (with the single device being responsible for distributing signals to the other devices for performing the user input). For example, the HIPD 842 can operate an application for generating the MR game environment 820 and provide the MR device 832 with corresponding data for causing the presentation of the MR game environment 820, as well as detect the user 802's movements (while holding the HIPD 842) to cause the performance of corresponding actions within the MR game environment 820. Additionally or alternatively, in some embodiments, operational data (e.g., sensor data, image data, application data, device data, and/or other data) of one or more devices is provided to a single device (e.g., the HIPD 842) to process the operational data and cause respective devices to perform an action associated with processed operational data.

In some embodiments, the user 802 can wear a wrist-wearable device 826, wear an MR device 832, wear smart textile-based garments 838 (e.g., wearable haptic gloves), and/or hold an HIPD 842 device. In this embodiment, the wrist-wearable device 826, the MR device 832, and/or the smart textile-based garments 838 are used to interact within an MR environment (e.g., any AR or MR system described above in reference to Figures 8A-8B). While the MR device 832 presents a representation of an MR game (e.g., second MR game environment 820) to the user 802, the wrist-wearable device 826, the MR device 832, and/or the smart textile-based garments 838 detect and coordinate one or more user inputs to allow the user 802 to interact with the MR environment.

In some embodiments, the user 802 can provide a user input via the wrist-wearable device 826, an HIPD 842, the MR device 832, and/or the smart textile-based garments 838 that causes an action in a corresponding MR environment. In some embodiments, each device uses respective sensor data and/or image data to detect the user input and provide an accurate representation of the user 802's motion. While four different input devices are shown (e.g., a wrist-wearable device 826, an MR device 832, an HIPD 842, and a smart textile-based garment 838) each one of these input devices entirely on its own can provide inputs for fully interacting with the MR environment. For example, the wrist-wearable device can provide sufficient inputs on its own for interacting with the MR environment. In some embodiments, if multiple input devices are used (e.g., a wrist-wearable device and the smart textile-based garment 838) sensor fusion can be utilized to ensure inputs are correct. While multiple input devices are described, it is understood that other input devices can be used in conjunction or on their own instead, such as but not limited to external motion-tracking cameras, other wearable devices fitted to different parts of a user, apparatuses that allow for a user to experience walking in an MR environment while remaining substantially stationary in the physical environment, etc.

As described above, the data captured by each device is used to improve the user's experience within the MR environment. Although not shown, the smart textile-based garments 838 can be used in conjunction with an MR device and/or an HIPD 842.

While some experiences are described as occurring on an AR device and other experiences are described as occurring on an MR device, one skilled in the art would appreciate that experiences can be ported over from an MR device to an AR device, and vice versa.

Some definitions of devices and components that can be included in some or all of the example devices discussed are defined here for ease of reference. A skilled artisan will appreciate that certain types of the components described may be more suitable for a particular set of devices, and less suitable for a different set of devices. But subsequent reference to the components defined here should be considered to be encompassed by the definitions provided.

In some embodiments example devices and systems, including electronic devices and systems, will be discussed. Such example devices and systems are not intended to be limiting, and one of skill in the art will understand that alternative devices and systems to the example devices and systems described herein may be used to perform the operations and construct the systems and devices that are described herein.

As described herein, an electronic device is a device that uses electrical energy to perform a specific function. It can be any physical object that contains electronic components such as transistors, resistors, capacitors, diodes, and integrated circuits. Examples of electronic devices include smartphones, laptops, digital cameras, televisions, gaming consoles, and music players, as well as the example electronic devices discussed herein. As described herein, an intermediary electronic device is a device that sits between two other electronic devices, and/or a subset of components of one or more electronic devices and facilitates communication, and/or data processing and/or data transfer between the respective electronic devices and/or electronic components.

The foregoing descriptions of Figures 8A-8C-2 provided above are intended to augment the description provided in reference to Figures 1-7. While terms in the following description may not be identical to terms used in the foregoing description, a person having ordinary skill in the art would understand these terms to have the same meaning.

Any data collection performed by the devices described herein and/or any devices configured to perform or cause the performance of the different embodiments described above in reference to any of the Figures, hereinafter the "devices," is done with user consent and in a manner that is consistent with all applicable privacy laws. Users are given options to allow the devices to collect data, as well as the option to limit or deny collection of data by the devices. A user is able to opt in or opt out of any data collection at any time. Further, users are given the option to request the removal of any collected data.

It will be understood that, although the terms "first," "second," etc. may be used herein to describe various elements, these elements should not be limited by these terms. These terms are only used to distinguish one element from another.

The terminology used herein is for the purpose of describing particular embodiments only and is not intended to be limiting of the claims. As used in the description of the embodiments and the appended claims, the singular forms "a," "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if" can be construed to mean "when" or "upon" or "in response to determining" or "in accordance with a determination" or "in response to detecting," that a stated condition precedent is true, depending on the context. Similarly, the phrase "if it is determined [that a stated condition precedent is true]" or "if [a stated condition precedent is true]" or "when [a stated condition precedent is true]" can be construed to mean "upon determining" or "in response to determining" or "in accordance with a determination" or "upon detecting" or "in response to detecting" that the stated condition precedent is true, depending on the context.

The foregoing description, for purpose of explanation, has been described with reference to specific embodiments. However, the illustrative discussions above are not intended to be exhaustive or to limit the claims to the precise forms disclosed. Many modifications and variations are possible in view of the above teachings. The embodiments were chosen and described in order to best explain principles of operation and practical applications, to thereby enable others skilled in the art.

## Claims

1. A method comprising:
receiving a first authentication input at a first device having a first privilege level; and
in response to receiving the first authentication input at the first device:
unlocking the first device;
generating a secondary authentication credential based on the first authentication input; and
transmitting the secondary authentication credential to one or more secondary devices, wherein:
the one or more secondary devices each have a respective privilege level that is lower than the first privilege level, and
the secondary authentication credential causes the one or more secondary devices to unlock.

2. The method of claim 1, further comprising:
based on a determination that another one or more devices have a respective privilege level that is higher than the first privilege level:
not transmitting the secondary authentication credential to the other one or more devices.

3. The method of claim 1 or claim 2, further comprising:
in response to receiving a locking input at the first device:
locking the first device;
generating a secondary locking output based on the locking input; and
transmitting the secondary locking output to the one or more secondary devices, wherein the secondary locking output causes the one or more secondary devices to lock.

4. The method of any preceding claim, further comprising:
receiving a secondary locking output transmitted from a secondary device of the one or more secondary devices, wherein the secondary locking output is generated based on a locking input received at the secondary device and transmitted to the first device and the other one or more secondary devices; and
in response to receiving the secondary locking output from the secondary device, locking the first device.

5. The method of any preceding claim, and one or more of the following:
(i) wherein the one or more secondary devices comprise a plurality of devices;
(ii) wherein at least one of the secondary devices comprises a user interface;
(iii) wherein a device type of at least one of the one or more secondary devices is the same as a device type of the first device.

6. The method of any preceding claim, further comprising, before transmitting the secondary authentication credential, verifying, by the first device, a device identity of the one or more secondary devices;
optionally, the method further comprising:
provisioning the first device and the one or more secondary devices with unique cryptographic identifiers; and
wherein verifying the device identify of the one or more secondary devices comprises:
establishing, using a first device cryptographic identifier, an identity of the first device to the one or more secondary devices; and
verifying, using respective cryptographic identifiers for the one or more secondary devices, identities of the one or more secondary devices.

7. The method of any preceding claim, further comprising one or more of the following:
(i) determining a respective privilege level for each of the one or more secondary devices;
(ii) establishing a private communication channel with the one or more secondary devices for transmitting the secondary authentication credential.

8. The method of any preceding claim, wherein:
the first device is configured to support a plurality of authentication methods for receiving a first authentication input, the plurality of authentication methods comprising at least one biometric authentication method and at least one knowledge-based authentication method.

9. A non-transitory, computer-readable storage medium storing instructions that, when executed by a computing system, cause the computing system to perform a process, the process comprising:
receiving a first authentication input at a first device having a first privilege level; and
in response to receiving the first authentication input at the first device:
unlocking the first device;
generating a secondary authentication credential based on the first authentication input; and
transmitting the secondary authentication credential to one or more secondary devices, wherein:
the one or more secondary devices each have a respective privilege level that is lower than the first privilege level, and
the secondary authentication credential causes the one or more secondary devices to unlock.

10. The non-transitory, computer-readable storage medium of claim 9, wherein the instructions further comprise instructions for:
based on a determination that another one or more devices have a respective privilege level that is higher than the first privilege level:
not transmitting the secondary authentication credential to the other one or more devices.

11. The non-transitory, computer-readable storage medium of claim 9 or claim 10, wherein the instructions further comprise instructions for one or more of the following:
(i) in response to receiving a locking input at the first device:
locking the first device;
generating a secondary locking output based on the locking input; and
transmitting the secondary locking output to the one or more secondary devices, wherein the secondary locking output causes the one or more secondary devices to lock;
(ii) receiving a secondary locking output transmitted from a secondary device of the one or more secondary devices, wherein the secondary locking output is generated based on a locking input received at the secondary device and transmitted to the first device and the other one or more secondary devices; and
in response to receiving the secondary locking output from the secondary device, locking the first device.

12. A wearable device, the wearable device comprising:
a processor; and
a memory on which is stored machine-readable instructions, which when executed, cause the processor to:
receive a first authentication input at the wearable device, the wearable device having a first privilege level; and
in response to receiving the first authentication input at the first device:
unlock the first device;
generate a secondary authentication credential based on the first authentication input; and
transmit the secondary authentication credential to one or more secondary devices, wherein:
the one or more secondary devices each have a respective privilege level that is lower than the first privilege level, and
the secondary authentication credential causes the one or more secondary devices to unlock.

13. The wearable device of claim 12, wherein the instructions further cause the processor to:
based on a determination that another one or more devices have a respective privilege level that is higher than the first privilege level:
not transmit the secondary authentication credential to the other one or more devices.

14. The wearable device of claim 12 or claim 13, wherein the instructions further cause the processor to:
in response to receiving a locking input at the first device:
lock the first device;
generate a secondary locking output based on the locking input; and
transmit the secondary locking output to the one or more secondary devices, wherein the secondary locking output causes the one or more secondary devices to lock.

15. The wearable device of any one of claims 12 to14, wherein the instructions further cause the processor to:
receive a secondary locking output transmitted from a secondary device of the one or more secondary devices, wherein the secondary locking output is generated based on a locking input received at the secondary device and transmitted to the first device and the other one or more secondary devices; and
in response to receiving the secondary locking output from the secondary device, lock the first device.
